# EUROPÄISCHE PATENTSCHRIFT

(11) **EP 3 980 224 B1**
(45) Veröffentlichungstag und Bekanntmachung des Hinweises auf die Patenterteilung: **16.08.2023**
(21) Anmeldenummer: 20742147.0
(22) Anmeldetag: 03.06.2020
(51) Int. Cl.: B25J 9/16

(54) **SICHERHEITSSCHALTELEMENT FÜR MASCHINEN ODER ROBOTER**
SAFETY SWITCH ELEMENT FOR MACHINES OR ROBOTS
ÉLÉMENT DE COMMUTATION DE SÉCURITÉ POUR DES MACHINES OU DES ROBOTS

(30) Priorität: 04.06.2019 DE 102019114973
(43) Veröffentlichungstag der Anmeldung: 13.04.2022
(73) Patentinhaber: KEBA Industrial Automation GmbH, 4040 Linz (AT)
(72) Erfinder: SCHININGER, Manfred, 4030 Linz (AT); LEHNER, Bernhard, 4242 Hirschbach (AT)
(74) Vertreter: Burger, Hannes
(86) Internationale Anmeldenummer: PCT/AT2020/060222
(87) Internationale Veröffentlichungsnummer: WO 2020/243761

(56) Entgegenhaltungen:
- WO-A1-2012/143053
- WO-A2-03/001393
- WO-A2-03/088011

## Beschreibung

Die Erfindung betrifft ein Sicherheitsschaltelement, eine Bedienvorrichtung, insbesondere ein Handbediengerät für Roboter oder andere Maschinen mit Programmier- und/oder Bedienelementen zur Programmierung und/oder Steuerung von Bewegungsabläufen oder Betriebszuständen, mit einem Sicherheitsschaltelement und ein Verfahren zum Überführen einer Maschine oder eines Roboters in einen sicheren Betriebszustand mit einem Sicherheitsschaltelement.

In der industriellen Praxis ist es üblich, Produktionsabläufe oder Fertigungsprozesse und dergleichen mittels einer oder mehrerer voll- und/oder halbautomatisch gesteuerter Maschine(n), welche zum Teil in ausgedehnten Anlagen mit einer Vielzahl an Anlagenkomponenten zusammengefasst sein können, auszuführen. Hierbei umfassen diese Prozesse zum Beispiel oftmals Abläufe bzw. Bewegungen, bei welchen beteiligte Massen, Energien, Kräfte, Temperaturen, Strahlungen, Stoffe, etc. grundsätzlich zu einer Gefährdung für die Gesundheit oder sogar das Leben von Menschen führen können. Dies gilt meist insbesondere im Falle des Eintretens ungewöhnlicher bzw. nicht ordnungsgemäßer Ausnahmesituationen oder Fehlerfälle.

Daher ist es zweckmäßig und auch geläufig bzw. vorgeschrieben, im Umfeld bzw. im Bereich von Anlagenkomponenten bzw. Maschinen oder Maschinenteilen an leicht zugänglichen und einzusehenden Stellen manuell betätigbare Sicherheitsschaltelemente anzuordnen, um Bedienpersonen ein möglichst rasches Reagieren auf Gefahrensituationen zur eindeutigen Beendigung einer Gefahrensituation zu ermöglichen. Bei manueller Betätigung solcher Sicherheitsschaltelemente kann eine Anlage oder Anlagenkomponente bzw. Maschine in einen sicheren Zustand versetzt werden. Je nach Typ bzw. Ausgestaltung einer jeweiligen Anlage bzw. Anlagenkomponente kann eine Versetzung in einen sicheren Zustand bzw. Betriebszustand etwa durch Abschalten von Antriebsvorrichtungen bzw. Aktuatoren, Unterbrechen der Energiezufuhr, Aktivieren von Bremsvorrichtungen oder ähnlichen Maßnahmen bewerkstelligt werden.

Derartige Sicherheitsschaltelemente umfassen zum Beispiel die bekannten, pilzförmig ausgestalteten Notaus- bzw. Nothalt-Schalter. Um solche Sicherheitsschaltelemente eindeutig und zweifelsfrei identifizieren zu können, sind in einschlägigen Normen spezifische, farbliche Kennzeichnungen hierfür vorgeschlagen, bzw. in vielen Fällen vorgeschrieben. Hierdurch ist beispielsweise ein Nothalt-Schalter auch für Personen, welche zur Bedienung einer Anlage oder Anlagenkomponente nicht spezifisch geschult sind, ein entsprechend farblich gekennzeichneter Nothalt-Schalter sowie dessen Wirkung dennoch eindeutig erkennbar bzw. geläufig.

Obwohl in der industriellen Fertigung die Prozesse und Abläufe größtenteils automatisiert von funktionalen, elektronischen Steuerungsvorrichtungen, welche funktionswirksam auf elektrisch und/oder hydraulisch steuerbare Komponenten einer Anlage einwirken können, vorgenommen werden, ist für bestimmte Abläufe bzw. Aufgaben eine manuelle Bedienung bzw. Steuerung durch eine menschliche Bedienperson zweckmäßig bzw. erforderlich. Beispiele hierfür sind etwa die Vornahme von Einstellungen oder eines Werkzeugwechsels, Behebung von Betriebsstörungen oder -fehlern, das Programmieren von Robotern oder das Einlernen oder Optimieren von Roboterbahnen, welches dem Fachmann auch als Teachen von Robotern bekannt ist.

Standard für die Eingabe von Steuerkommandos durch eine menschliche Bedienperson sind stationäre Bediengeräte, welche an der Maschine an einer relevanten Position eingebaut sind.

Heutzutage werden darüber hinaus für Abläufe bzw. Aufgaben, welche die manuelle Eingabe von Steuerungskommandos durch eine menschliche Bedienperson erfordern, häufig mobile bzw. transportable Bediengeräte verwendet. Solche mobilen Handbediengeräte erlauben einer Bedienperson eine gewisse Beweglichkeit im Bereich einer Anlage bzw. Maschine. Von Vorteil ist dabei, dass die Bedienperson während der manuellen Bedienung eine geeignete bzw. günstige Beobachtungsposition im Bereich einer Maschine einnehmen kann.

Grundsätzlich können derartige, mobile Handbediengeräte zur Bereitstellung bzw. Übertragung von Daten, Signalen und Steuerungskommandos über drahtgebundene oder drahtlose Kommunikationsverbindungen mit einer oder mehreren funktionalen Steuerungsvorrichtungen einer elektrisch steuerbaren Anlage und/oder Anlagenkomponente verbunden sein. Die Eingabe von Steuerungskommandos an einem solchen signal- und datentechnisch gekoppelten Handbediengerät kann über entsprechende Kommunikationsverbindungen an eine Steuerungsvorrichtung übertragen werden, welche Steuerungsvorrichtung sodann die übertragenen bzw. bereitgestellten Steuerungskommandos umgehend in entsprechende Steuerungssignale für Aktuatoren, Antriebe, Heiz- oder Kühlmittel, oder sonstige elektrisch und/oder hydraulisch steuerbare Maschinenkomponenten umsetzt. In sicherheitstechnischer Hinsicht ist in diesem Zusammenhang von großem Vorteil, wenn auch an einem Handbediengerät zumindest ein Sicherheitsschaltelement, beispielsweise in der Art eines Notaus- bzw. Nothalt-Schalters vorgesehen ist.

In der WO 03/012809 A1 wird eine Sicherheitsschalteinrichtung für elektrisch gesteuerte Maschinen offenbart, zur Verwendung in Kombination mit den eigentlichen Steuerungselementen der Maschinensteuerung bei Handbetrieb bzw. manueller Bedienung, mit zumindest einem, von einem Bediener entsprechend der gewünschten Schaltfunktion relativ zu einem Halterahmen zu verstellendem Betätigungselement, welche zur Veränderung des Schaltzustandes wenigstens eines elektrischen Schaltelementes ausgebildet sind, wobei die Sicherheitsschalteinrichtung wenigstens eine Schaltstellung aufweist, die nur während dem Einwirken einer ausreichend hohen Betätigungskraft auf die verstellbaren Betätigungselemente eingenommen bleibt.

In der DE 100 23 199 A1 wird eine Sicherheitsschalteinrichtung zur Verwendung in Kombination mit den üblichen Programmier- und/oder Bedienelementen einer Maschinen- bzw. Robotersteuerung für manuelle Steuer- bzw. Programmiervorgänge an Maschinen oder Robotern beschrieben. Die Sicherheitsschalteinrichtung ermöglicht die wechselweise Einnahme wenigstens zweier, insbesondere dreier Schaltzustände, wie Ruhezustand, Zustimmungszustand und/oder Panikzustand, wobei ein Kraft- oder Drucksensor angeordnet ist, auf welchen von einem Bediener zur Betätigung (Umschaltung) der Sicherheitsschalteinrichtung eine Kraftwirkung einbringbar ist. Der Kraft- oder Drucksensor ist zur Ermittlung der jeweils eingenommenen Schaltzustände in Abhängigkeit der vom Kraft- oder Drucksensor erfassten Belastungswerte mit einer elektronischen Auswertevorrichtung verbunden.

Aus dem Stand der Technik gehen des Weiteren Notaus-Schalter hervor, welche eine zusätzliche Betätigungsfunktion aufweisen.

In der DE 197 24 567 A1 wird ein Drehschalter mit einem auf einer Betätigungswelle angebrachten Drehgriff beschrieben, wobei mindestens ein die Oberseite des Drehgriffs bildender Griffteil axial gegen Federkraft verschiebbar ist und dabei mit einem Schalterstößel einer Notaus-Schalteinrichtung in Eingriff tritt.

In der WO 2017/198580 A1 wird eine mobile Sicherheits-Grundsteuervorrichtung eines Roboters offenbart, aufweisend ein handhaltbares Gehäuse, ein am Gehäuse angeordnetes Nothalt-Schaltmittel, eine Kommunikationsvorrichtung zum steuerungstechnischen Verbinden der mobilen Sicherheits-Grundsteuervorrichtung mit einer Robotersteuerung des Roboters, sowie aufweisend einen mit dem Gehäuse verbundenen Halter, der ausgebildet ist, zum Lagern der mobilen Sicherheits-Grundsteuervorrichtung an einem mobilen Endgerät, das eine Endgeräte-Steuerung und einen Multi-Touchscreen aufweist, der ausgebildet ist, Eingaben über den Multi-Touchscreen an die Endgeräte-Steuerung zu übermitteln, wobei die mobile Sicherheits-Grundsteuervorrichtung eine Kodiervorrichtung aufweist, die ausgebildet ist, in einem mittels des Halters an dem mobilen Endgerät gelagerten Zustand der Sicherheits-Grundsteuervorrichtung wenigstens einen die mobile Sicherheits-Grundsteuervorrichtung identifizierenden Identifikationscode automatisch über den Multi-Touchscreen an die Endgeräte-Steuerung zu übermitteln.

Die WO 2012/143053 A1, die WO 03/088011 A2 und die WO 03/001393 A2 offenbaren weitere industrielle Steuervorrichtungen, welche jeweils Nothalt-Schaltvorrichtungen und Zustimm-Schaltvorrichtungen umfassen.

Aufgabe der vorliegenden Erfindung war es, die Nachteile des Standes der Technik zu überwinden und ein verbessertes Sicherheitsschaltelement zu schaffen, welches mehrere Funktionen vereint, wobei der Bedienkomfort und die Sicherheit für die Bedienperson erhöht und gleichzeitig der Platzbedarf für die Anordnung von Sicherheitsschaltelementen reduziert werden.

Diese Aufgabe wird durch Vorrichtungen und ein Verfahren gemäß den Ansprüchen gelöst.

Die Erfindung betrifft ein Sicherheitsschaltelement zur Verwendung in Kombination mit Programmier- und/oder Bedienelementen einer Maschinen- bzw. Robotersteuerung für manuelle Steuer- bzw. Programmiervorgänge an Maschinen oder Robotern umfassend ein Nothalt-Schaltmittel, wobei das Nothalt-Schaltmittel die wechselweise Einnahme der Nothalt-Schaltzustände Inaktivzustand (I) und Aktivzustand (A) ermöglicht und einen Zustimmtaster, wobei der Zustimmtaster die wechselweise Einnahme wenigstens zweier Zustimmtaster-Schaltzustände, wie Ruhezustand (R) und Zustimmungszustand (Z) ermöglicht, wobei der Zustimmtaster lastabtragend am Nothalt-Schaltmittel abgestützt ist.

Vorteilhaft bei einem kombinierten Sicherheitsschaltelement, welches Nothalt-Schaltmittel und Zustimmtaster umfasst, ist, dass für die Platzierung bzw. Positionierung der Schaltelemente auf einer Maschine, einem Roboter, einem stationären oder mobilen Bediengerät, insbesondere Handbedienungsgerät oder einem sonstigen Teil einer technischen Anlage, der Platzbedarf wesentlich geringer ist, als bei der Platzierung zwei getrennt angeordneter Schaltelemente. Gleichzeitig ist hierbei eine schnelle und leichte Zugänglichkeit gewährleistet.

Weiters ist durch die Kombination des Nothalt-Schaltmittels mit dem Zustimmtaster eine kostengünstige Fertigung möglich, nachdem bestimmte Bauteile wie Schaltersockel vom Nothalt-Schaltmittel und dem Zustimmtaster gemeinsam verwendet werden und elektromechanische Komponenten, wie Sicherheitsschaltkontakte eingespart werden können.

Durch die Ausgestaltung des Nothalt-Schaltmittels ist auch die einfache Betätigung mit der Handfläche eines Bedieners gegeben. Nach der Betätigung des Nothalt-Schaltmittels erfolgt ein mechanisches Verrasten im Nothalt-Aktivzustand (A).

Der Zustimmtaster ist aus dem Zustimmungszustand (Z) in den Ruhestand (R) automatisch rückstellbar ausgeführt. Eine derartige Rückstellung kann beispielsweise mittels einer Federkraft realisiert werden.

Auch ist es von Vorteil, dass mehrere Funktionen in einem Schaltelement vereint werden, wobei der Bediener keinen Wechsel zwischen Zustimmtaster und Nothalt-Schaltmittel durchführen muss. Dadurch steigt die Sicherheit maßgeblich, indem beispielsweise im Zuge der Durchführung einer Programmieroperation mit dem Zustimmtaster, bei Eintreten einer sicherheitskritischen Situation, der Bediener nicht auf das Nothalt-Schaltmittel umgreifen muss. Als Umgreifen wird hierbei eine wechselweise Verwendung von zwei separat angeordneten Schaltelementen verstanden, wobei Zustimmtaster und Nothalt-Schaltmittel nicht in einem Sicherheitsschaltelement zusammengefasst sind.

Auch durch Aufwenden einer erhöhten Betätigungskraft auf den Zustimmtaster, kann der Bediener einen Aktivzustand (A) des Nothalt-Schaltmittels schnell und sicher herbeiführen.

Ein weiterer Vorteil ist dabei auch, dass bei Betätigung des Betätigungsbereichs des Nothalt-Schaltmittels mit einer bestimmten Kraft, nämlich einer zweiten Betätigungskraft, der Nothalt-Aktivzustand (A) aktiviert wird, wobei der Zustimmtaster nicht berührt wird und im Ruhezustand (R) verweilt. Im Falle, dass sich der Zustimmtaster bei der Aktivierung des Nothalt-Aktivzustandes (A) bereits im Zustimmungszustand (Z) befindet, wird der Zustimmungszustand (Z) durch eine nachgeschaltete Auswertelogik aufgehoben. Bei der Auswertelogik kann es sich um eine elektrische, mechanische, und/oder elektromechanische Auswertelogik handeln.

Die Auswertelogik bildet dabei einen Gesamtzustand bzw. Systemzustand des Sicherheitsschaltelements ab und umfasst einen System-Ruhezustand (Rs), einen System-Zustimmungszustand (Zs), einen System-Panikzustand (Ps), einen System-Nothalt-Aktivzustand (As) und einen System-Fehlerzustand (Fs). In dem System-Ruhezustand (Rs) befindet sich dabei das Nothalt-Schaltmittel in einem Inaktivzustand (I).

Der Zustimmtaster bzw. das System ist dabei auch dazu ausgebildet, einen optionalen dritten Zustimmtaster-Schaltzustand, nämlich einen System-Panikzustand (Ps) einzunehmen. Der Panikzustand (Ps) ist dem Fachmann auch als "Panik" oder "durchgedrückt" bekannt.

Eine andere Möglichkeit besteht darin, dass der Nothalt-Aktivzustand (A) durch die Betätigung des Zustimmtasters mit der zweiten Betätigungskraft aktiviert wird, wobei im Zuge der Betätigung des Zustimmtasters mit der ersten Betätigungskraft der Zustimmungszustand (Z) bzw. System-Zustimmungszustand (Zs) aktiviert wird, aber nach dem Aktivieren des Nothalt-Aktivzustandes (A) der Zustimmungszustand (Z) bzw. System-Zustimmungszustand (Zs) nicht mehr eingenommen bzw. aufgehoben wird und einen System-Nothalt-Aktivzustand (As) oder System-Panikzustand (Ps) eingenommen wird.

Eine Alternative besteht auch darin, dass eine Auswertelogik nachgeschaltet ist, welche eine Messvorrichtung bzw. einen Timer umfasst, welche die Verweilzeit mit der ersten Betätigungskraft auf den Zustimmtaster misst und bei einer kurzen Verweildauer z.B. <0,5 Sekunden, den Zustimmungszustand (Z) aktiviert, den System-Zustimmungszustand (Zs) jedoch nicht einnimmt und bei einer Verweilzeit mit der ersten Betätigungskraft auf den Zustimmtaster bei einer längeren Dauer >0,5 Sekunden den Zustimmungszustand (Z) bzw. System-Zustimmungszustand (Zs) einnimmt.

Hiermit können sicherheitskritische Situation verhindert bzw. weitgehend hintangehalten werden.

Die Nothalt-Schaltzustände Inaktivzustand (I) und Aktivzustand (A) sind dem Fachmann auch als Nothalt-Normalzustand und als Nothalt-Aktivzustand bekannt. Die Zustimmtaster-Schaltzustände Ruhezustand (R) und Zustimmungszustand (Z) sind dem Fachmann auch als die Zustände "berührt" und "nicht-berührt" bekannt.

Liegt ein Aktivzustand (A) bzw. ein System-Nothalt-Aktivzustand (As) vor, wird eine Maschine und/oder ein Roboter unverzüglich in Stillstand versetzt, um sicherheitskritische Situationen zu verhindern.

Des Weiteren kann es zweckmäßig sein, wenn das Nothalt-Schaltmittel eine umlaufende Seitenwandung umfasst, welche einen Hohlraum begrenzt, in welchem Hohlraum der Zustimmtaster aufgenommen ist.

Die umlaufende Seitenwandung dient dabei als Betätigungsorgan für das Nothalt-Schaltmittel. Bei einem Eingriff mit einem oder mehreren Fingern einer Hand eines Bedieners in den Hohlraum wird eine Betätigung des Zustimmtasters ermöglicht.

Durch die Ausgestaltung des Nothalt-Schaltmittels mit der umlaufenden Seitenwandung ist wiederum die einfache Betätigung des Nothalt-Schaltmittels mit der Handfläche eines Bedieners möglich. Durch die umlaufende Seitenwandung wird die Betätigung des Zustimmtasters bei Schlagen bzw. Betätigung des Nothalt-Schaltmittels mit der Handfläche hintangehalten.

Bei der Form der Seitenwandung kann es sich um eine im Wesentlichen hohlzylindrische Seitenwandung oder eine ellipsenförmige Seitenwandung handeln. Die geometrische Form bzw. die Form des Sicherheitsschaltelements sind jedoch nicht darauf beschränkt. Es ist auch eine rechteckige oder eine sonstige geometrische Form für das Sicherheitsschaltelement denkbar.

Vorteilhafterweise wird hiermit eine kompakte Bauweise des Sicherheitsschaltelements realisiert, womit der Platzbedarf für den Einbau bzw. der Anordnung auf einer Maschine, einem Roboter einer Bedienvorrichtung oder einem sonstigen Anlagenteil minimiert wird. Gleichzeitig kann somit, indem eine für das Sicherheitsschaltelement bevorzugte Anordnungsposition gewählt wird, die Zugänglichkeit für einen Bediener verbessert werden. Zusätzlich kann durch die erfindungsgemäße Ausgestaltung eine unbeabsichtigte Betätigung des Zustimmtasters im Zuge der Betätigung des Nothalt-Schaltmittels verhindert bzw. hintangehalten werden.

Ferner kann vorgesehen sein, dass der Zustimmtaster konzentrisch im Nothalt-Schaltmittel aufgenommen ist.

Hiermit kann weiterhin eine kompakte Bauweise realisiert werden. Zustimmtaster und Nothalt-Schaltmittel weisen bei der konzentrischen Anordnung einen gemeinsamen Mittelpunkt auf.

Auch ist es wiederum von Vorteil, dass mehrere Funktionen in einem Schaltelement vereint werden, wobei der Bediener keinen Wechsel zwischen Zustimmtaster und Nothalt-Schaltmittel durchführen muss.

Darüber hinaus kann vorgesehen sein, dass der Zustimmtaster lastabtragend auf einem Lastabtragungsbereich des Nothalt-Schaltmittels abgestützt ist.

Das Nothalt-Schaltmittel umfasst dabei ferner einen Betätigungsbereich. Durch Betätigung des Nothalt-Schaltmittels im Betätigungsbereich erfolgt eine direkte Betätigung des Nothalt-Schaltmittels und die Aktvierung des Aktivzustandes (A).

Über den Lastabtragungsbereich wird das Nothalt-Schaltmittel mittels des Zustimmtasters indirekt betätigt, wobei durch die Lastabstützung des Zustimmtasters auf dem Nothalt-Schaltmittel bzw. auf dem Lastabtragungsbereich, die Betätigungskraft indirekt übertragen wird, womit die Aktvierung des Aktivzustandes (A) eingeleitet wird.

Bei dem Lastabtragungsbereich kann es sich beispielsweise um die Bodenfläche im Hohlraum handeln, welcher durch die umlaufende Seitenwandung des Nothalt-Schaltmittels gebildet wird.

Zusätzlich können auch ein Zustimmtastersicherheitskreis und ein Schließer-Kontakt zumindest teilweise lastabtragend in dem Lastabtragungsbereich abgestützt sein.

Vorteilhaft ist auch eine Ausprägung, gemäß welcher vorgesehen sein kann, dass der Lastabtragungsbereich als zumindest ein Rücksprung an einer Innenmantelfläche der Seitenwandung des Nothalt-Schaltmittels ausgebildet ist, auf welchem Rücksprung der Zustimmtaster zumindest teilweise lastabtragend abgestützt ist.

Bei dem Rücksprung kann es sich dabei um einen entlang der Innenmantelfläche umlaufenden Rücksprung oder um mehrere einzelnen Rücksprünge handeln, welche entlang der Innenmantelfläche angeordnet sind.

Der Rücksprung oder die Rücksprünge bilden dabei den Lastabtragungsbereich, welcher mittels des Zustimmtasters bzw. des Zustimmtaster-Betätigungsorgans indirekt betätigt bzw. gedrückt werden kann. Durch die Lastabstützung des Zustimmtasters bzw. des Zustimmtaster-Betätigungsorgans wird die Betätigungskraft indirekt übertragen, womit die Aktvierung des Aktivzustandes (A) erfolgen kann.

Gemäß einer Weiterbildung ist es möglich, dass der Zustimmungszustand (Z) durch Aufbringung einer ersten Betätigungskraft auf ein Zustimmtaster-Betätigungsorgan des Zustimmtasters einnehmbar ist und dass der Aktivzustand (A) des Nothalt-Schaltmittels durch Aufbringung einer zweiten Betätigungskraft auf das Zustimmtaster-Betätigungsorgan einnehmbar ist, wobei die erste Betätigungskraft im Vergleich zur zweiten Betätigungskraft geringer ist.

Ein wesentlicher Vorteil des erfindungsgemäßen Sicherheitsschaltelements ist dabei, dass bei der Einwirkung der zweiten Betätigungskraft der Aktivzustand (A) des Nothalt-Schaltmittels direkt aktiviert werden kann, entweder durch Betätigung des Nothalt-Schaltmittels im Betätigungsbereich, oder indirekt aktiviert werden kann, durch Aufbringen der zweiten Betätigungskraft auf den Zustimmtaster bzw. das Zustimmtaster-Betätigungsorgan. Der Zustimmtaster stützt sich dabei lastabtragend am Nothaltschaltmittel ab, wodurch bei der indirekten Aktivierung mit einer zweiten Betätigungskraft nach einer kurzen Aktivierung des Zustimmungszustandes (Z) durch die Lastabtragung der Nothalt Aktivzustand (A) aktiviert wird. Die kurze Aktivierung des System-Zustimmungszustandes (Zs) kann mithilfe Auswertelogik ignoriert werden.

Ferner kann es zweckmäßig sein, wenn in einem oberen Wandbereich der Seitenwandung des Nothalt-Schaltmittels ein umlaufender Betätigungsschutzkragen ausgebildet ist, welcher das Zustimmtaster-Betätigungsorgan des Zustimmtasters zumindest abschnittsweise überragt.

Der obere Wandbereich ist dabei der vom Schaltersockel abgewandte Wandbereich.

Vorteilhafterweise kann mittels dem Betätigungsschutzkragen verhindert werden, dass bei Schlagen des Nothalt-Schaltmittels durch einen Bediener, der Zustimmtaster bzw. das Zustimmtaster-Betätigungsorgan betätigt wird. Die Aktivierung des Zustimmungszustands (Z) im Zuge der Herbeiführung des Aktivzustandes (A) kann somit verhindert werden und sicherheitskritische Situationen können hintangehalten werden.

Darüber hinaus kann vorgesehen sein, dass der Betätigungsschutzkragen zumindest eine Ausnehmung aufweist, wobei der Betätigungsschutzkragen im Bereich der Ausnehmung zumindest abschnittsweise im Wesentlichen flächenbündig mit der Oberfläche des Zustimmtaster-Betätigungsorgans ausgeführt ist.

Vorteilhafterweise kann hiermit eine verbesserte Ergonomie des Sicherheitsschaltelements erreicht werden, wobei mittels der Ausnehmung eine komfortable Bedienung des Zustimmtasters erreicht wird. Ein Finger oder mehrere Finger einer Hand des Bedieners können durch die Vertiefung der Umrandung in den Hohlraum des Sicherheitsschaltelements hineingelegt werden und der Zustimmtaster vom Ruhezustand (R) in den Zustimmungszustand (Z) betätigt werden. Kommt es zu einer für den Bediener sicherheitskritischen Situation kann eine erhöhte Betätigungskraft auf den Zustimmtaster aufgebracht werden, wodurch der Nothalt-Aktivzustand (A) aktiviert wird und ein Roboter, eine Maschine oder ein sonstiger Teil einer technischen Anlage in einen sicheren Zustand überführt werden.

Des Weiteren kann vorgesehen sein, dass das Nothalt-Schaltmittel einen Mitnehmer für den Zustimmtaster umfasst, wobei bei Vorliegen des Aktivzustandes (A) der Mitnehmer die Betätigung des Zustimmtasters in den Zustimmungszustand blockiert und diese Blockade im Nothalt-Inaktivzustand (I) wieder aufgehoben werden kann.

Hiermit kann eine Aktivierung des Zustimmungsaktivzustandes (Z) mechanisch verhindert werden, wenn das Nothalt-Schaltmittel sich im Nothalt-Aktivzustand (A) befindet. Vorteilhafterweise wird durch die Verriegelung des Zustimmtasters eine Einnahme des Zustimmungszustandes (Z) während des Nothalt-Aktivzustandes (A) verhindert, wodurch sicherheitskritische Situationen hintangehalten werden können. Der Mitnehmer kann dabei als eine oder mehrere Rastnasen ausgeführt sein oder eine Federvorspannung umfassen. Bei der Überführung des Nothaltschaltmittels in den Inaktivzustand (I) wird die Verriegelung des Zustimmtasters aufgehoben.

Gemäß einer besonderen Ausprägung ist es möglich, dass das Nothalt-Schaltmittel eine Nothalt-Rastvorrichtung zum Einnehmen einer Nothalt-Rastposition umfasst, wobei die Nothalt-Rastposition im Aktivzustand (A) eingenommen bleibt.

Bei der Rastvorrichtung kann es sich um eine mechanische Verrastfunktion handeln, welche nur durch eine hochgradig bewusste Bedienhandlung durch den Bediener gelöst werden kann, um sicherheitskritische Situationen hintanzuhalten. Zur Entriegelung kann eine Rotationsbewegung des Nothalt-Schaltmittels, eine starke Gegenkraft, oder eine kombinierte Drück- und Rotationsbewegung des Nothalt-Schaltmittels vorgesehen sein.

Des Weiteren kann es vorteilhaft sein, wenn eine elektrische und/oder logische System-Nothaltaktivzustandsverriegelung vorgesehen ist, wobei im Aktivzustand (A) des Nothalt-Schaltmittels (19) alle Schaltzustände vom Zustimmtaster (20) ((Z), Ruhezustand (R)) zu keiner Änderung des Systemzustands führen.

Hierbei kann beispielsweise eine mechanische Sperre der Einnahme des Zustimmungszustandes (Z) vorgesehen sein, oder es erfolgt eine Sperre der Einnahme des System-Zustimmungszustands (Zs) mittels der Auswertelogik.

Weiters kann eine Sperre von der eingestellten Maschinenbetriebsart abhängen, welche typischerweise von der Auswertelogik berücksichtigt werden muss.

Während sich das Nothalt-Schaltmittel in der Rastposition befindet, ist vorteilhafterweise der Zustimmtaster nicht betätigbar bzw. löst die Betätigung des Zustimmtasters keinen Zustimmungszustand (Z) hervor.

Im Grunde wäre der Zustimmtaster zwar betätigbar, löst aber keine Reaktion aus. Dies kann über die Auswertelogik ausgewertet werden. Vorteilhafterweise können hierdurch sicherheitskritische Situationen hintangehalten werden.

Entsprechend einer vorteilhaften Weiterbildung kann vorgesehen sein, dass das Nothalt-Schaltmittel dazu ausgebildet ist, zumindest einen Öffner-Kontakt zu betätigen, welcher Öffner-Kontakt dazu ausgebildet ist, zumindest einen Nothaltsicherheitskreis zur Einnahme des Aktivzustandes (A) zu öffnen und dass der Zustimmtaster dazu ausgebildet ist, zumindest einen Schließer-Kontakt zu betätigen, welcher Schließer-Kontakt dazu ausgebildet ist, zumindest einen Zustimmtastersicherheitskreis zur Einnahme des Zustimmungszustandes (Z) zu schließen.

Vorteilhafterweise sind dabei die Öffner-Kontakte und Schließer-Kontakte mehrfach, sowie die Sicherheitskreise (Nothaltsicherheitskreis, Zustimmtastersicherheitskreis) zwei- bzw. mehrkreisig ausgeführt, um eine erhöhte Sicherheit durch Redundanz zu schaffen. Zumindest ein Öffner-Kontakt bzw. zumindest ein Schließer-Kontakt wirkt dabei auf die einzelnen Kreise des jeweiligen Sicherheitskreises. Zumindest einer der Nothalt-Kreise muss geöffnet sein, um den Nothalt-Aktivzustand (A) zu aktivieren. Für die Aktivierung des Zustimmungszustandes (Z) bei zweikreisigen Sicherheitskreisen müssen alle Zustimm-Kreise gleichzeitig geschlossen sein, bei mehrkreisigen Sicherheitskreisen muss die Mehrheit gleichzeitig geschlossen sein. Damit können sicherheitstechnische Maßnahmen wie z.B. Ein-Fehlersicherheit und Fehlererkennung realisiert werden.

Insbesondere kann es vorteilhaft sein, wenn zumindest ein Teil des Nothaltsicherheitskreises und/oder des Zustimmtastersicherheitskreises in einem Schaltersockel aufgenommen ist.

Hiermit kann weiterhin eine kompakte, kostengünstige Bauweise des Sicherheitsschaltelements erreicht werden, indem sämtliche funktionswesentlichen Bauteile in einer Baugruppe integriert sind. Zusätzlich wird damit eine schnelle und einfache Montage bzw. Repositionierung des Sicherheitsschaltelements ermöglicht.

Vorteilhaft ist auch eine Ausprägung, gemäß welcher vorgesehen sein kann, dass zumindest ein Zustimmtastersicherheitskreis mit zumindest einem Schließer-Kontakt lastabtragend am Nothalt-Schaltmittel abgestützt ist.

Mittels zumindest einem Schließer-Kontakt ist der Zustimmtastersicherheitskreis betätigbar. Vorteilhafterweise ist dabei neben dem Nothaltsicherheitskreis auch die Auswertelogik oder eine Schnittstelle zu einer Auswerteelektronik im Schaltersockel vorgesehen.

Ferner kann vorgesehen sein, dass eine Sicherheits-Auswertelogik vorgesehen ist, welche dazu ausgebildet ist, aus dem Nothalt-Schaltzustand und/oder dem Zustimmtaster-Schaltzustand einen Systemzustand zu ermitteln.

Eine Information zu den Schaltzuständen kann in weiterer Folge über eine Schnittstelle weitergegeben werden, beispielsweise um eine Maschine oder einen Roboter in einen sicheren Zustand oder in einen Stopp-Zustand zu überführen oder infolge einer bestimmten Betätigungshandlung eine zusätzliche Visualisierung auf einem Bediengerät zu ermöglichen. Ferner kann über die Auswertelogik ausgewertet werden, ob der Lastabtragungsbereich oder der Betätigungsbereich im Zuge einer Bedienhandlung vom Bediener betätigt wurden. Bei einer Betätigung des Betätigungsbereiches des Nothalt-Schaltmittels mit einer zweiten Betätigungskraft kann in weiterer Folge der System-Nothalt-Aktivzustand (As) aktiviert werden. Bei einer Betätigung des Lastabtragungsbereichs des Nothalt-Schaltmittels mit einer zweiten Betätigungskraft, wobei es sich um eine indirekte Betätigung über den Zustimmtaster handelt, kann in weiterer Folge ein System-Panikzustand (Ps) und/oder der System-Nothalt-Aktivzustand (As) aktiviert werden.

Auch kann mithilfe der Auswertelogik die Zeitspanne ermittelt werden, über welche der Zustimmtaster durch den Bediener gedrückt gehalten wurde. Durch Überschreiten der ersten Betätigungskraft und dem sofortigen Aufbringen der zweiten Betätigungskraft kann der System-Nothalt-Aktivzustand (As) aktiviert werden. Liegt die erste Betätigungskraft bereits über eine längere Zeitdauer vor, so kann bei Vorliegen der zweiten Betätigungskraft der System-Panikzustand (Ps) aktiviert werden. Die logische Auswertung hierzu kann von einer eigenen Sicherheits-Auswertelogik oder von der Sicherheitssteuerung der Maschine oder des Roboters durchgeführt werden.

Mittels der Auswertelogik kann zwischen einem aktivierten System-Panikzustand (Ps) und einem Nothalt-Aktivzustand (A) bzw. System-Nothalt-Aktivzustand (As) unterschieden werden, weil
1. der System-Nothalt-Aktivzustand (As) durch Berühren des Nothalt-Schaltmittel allein aktiviert wurde, weil nur der Betätigungsbereich des Nothalt-Schaltmittels berührt wurde;
2. der System-Nothalt-Aktivzustand (As) indirekt aktiviert wurde, durch schnelles Durchdrücken des Zustimmtaster-Betätigungsorgans über den Zustimmungszustand (Z) in den Nothalt-Aktivzustand (A) innerhalb von z.B. 0,5 Sekunden, ohne den System-Zustimmungszustand (Zs) zu aktivieren;
3. der System-Panikzustand (Ps) aktiviert wurde, weil zuvor für eine längere Zeitspanne z.B. >0,5 Sekunden der Zustimmtaster in dem Zustimmungszustand (Z) gehalten wurde und das System in den System-Zustimmungszustand (Zs) gewechselt ist, bevor der Schalter durch die zweite Betätigungskraft in den Nothalt-Aktivzustand (A) betätigt wurde, wodurch das System in den System-Panikzustand (Ps) wechselt.

Basierend auf diesen Informationen können an der Maschine unterschiedliche Stopp-Funktionen ausgelöst werden.

Dem Sicherheitsfachmann sind die Stopp-Kategorien 0, 1 und 2 bekannt. Bei der Stopp-Kategorie 0 oder SS0-Stopp erfolgt eine sofortige Wegnahme der Antriebsenergie, was gegebenenfalls mit dem Einfallen von mechanischen Bremsen kombiniert werden kann. Bei der Stopp-Kategorie 1 oder SS1-Stopp erfolgt ein schnelles, geregeltes Stillsetzen der Maschine, was gegebenenfalls mit dem Einfallen von mechanischen Bremsen kombiniert werden kann und einer anschließenden Wegnahme der Antriebsenergie. Bei der Stopp-Kategorie 2 erfolgt ein schnelles, geregeltes Stillsetzen der Maschine wobei die Antriebsenergie nicht weggenommen wird, sondern nur der Stillstand überwacht werden muss.

Für die Zustände System-Nothalt-Aktivzustand (As) und System-Panikzustand (Ps) kann zwischen der Stopp-Kategorie 0 und 1 gewählt werden.

Darüber hinaus kann vorgesehen sein, dass die Auswertelogik die Einnahme eines System-Fehlerzustandes (Fs) ermöglicht, wobei der System-Fehlerzustand (Fs) einnehmbar ist, wenn ausgehend vom Aktivzustand (A) des Nothalt-Schaltmittels der Inaktivzustand (I) aktiviert wird, wobei der Zustimmungszustand (Z) aktiv ist.

Mithilfe der Auswertelogik kann bei gleichzeitiger Deaktivierung des Nothalt-Aktivzustandes und Vorliegen des Zustimmungszustandes (Z) der System-Fehlerzustand (Fs) ausgegeben werden, bis der Zustimmtaster vom Zustimmungszustand (Z) in den Ruhezustand (R) überführt wird. Das System verweilt bis zur Überführung des Zustimmungszustands (Z) in den Ruhezustand (R) im System-Nothalt-Aktivzustand (As), wobei ein anderer Zustand nicht eingenommen werden kann.

Vorteilhaft ist auch eine Ausprägung, gemäß welcher vorgesehen sein kann, dass eine Messvorrichtung vorgesehen ist, welche dazu ausgebildet ist, eine Betätigungsdauer des Zustimmtasters mit der ersten und/oder zweiten Betätigungskraft zu ermitteln.

Um das Vorliegen eines System-Panikzustandes (Ps) zu detektieren ist vorteilhafterweise eine Messvorrichtung zur Messung der Betätigungsdauer des Zustimmtasters vorgesehen. Hierbei ist auch eine Messung der Verweildauer eines Fingers einer Hand des Bedieners denkbar.

Ferner kann mittels der Auswertelogik zwischen einem System-Nothalt-Aktivzustand (As) und einem System-Panikzustand (Ps) unterschieden werden.

Vorteilhafterweise wird die Position der Aufbringung der zweiten Betätigungskraft detektiert (Lastabtragungsbereich oder Betätigungsbereich) und/oder die Betätigungsdauer des Zustimmtasters mit der ersten Betätigungskraft.

Ferner kann es zweckmäßig sein, wenn mit der Auswertelogik eine Zustands- Steuervorrichtung gekoppelt bzw. in dieser enthalten ist, welche dazu ausgebildet ist, dass im Aktivzustand (A) des Nothalt-Schaltmittels, wodurch sich das System im System-Nothalt-Aktivzustand (As) befindet, alle möglichen Zustände des Zustimmtasters (Zustimmungszustand (Z), Ruhezustand (R)) zu keiner Änderung des System-Nothalt-Aktivzustandes (As) führen.

Mithilfe der Auswertelogik wird vorteilhafterweise bei Vorliegen der Nothalt-Rastposition bzw. des Nothalt-Aktivzustandes (A) ein Überführen des Zustimmtasters in den Zustimmungszustand (Z) bzw. System-Zustimmungszustand (Zs) verhindert. Auch wird dabei die Einnahme des System-Zustimmungszustandes (Zs) verhindert, solange sich das System im System-Nothalt- Aktivzustand (As) befindet.

Des Weiteren kann es zweckmäßig sein, wenn das Nothalt-Schaltmittel mit einer Beleuchtungseinheit hinterleuchtbar ausgeführt ist, welche Beleuchtungseinheit dazu ausgebildet ist das Nothalt-Schaltmittel farbig zu hinterleuchten.

Vorteilhafterweise kann hierbei durch eine Farbänderung dem Benutzer die Verfügbarkeit des Sicherheitsschaltelements bzw. des Nothalt-Schaltmittels signalisiert werden. Mit der Hinterleuchtung durch die Beleuchtungseinheit erscheint das Schaltmittel beispielsweise rot-gelb und ohne Hinterleuchtung erscheint das Schalmittel beispielsweise gelb-grau. Anhand der Farbgebung kann der Benutzer unterscheiden, ob der Nothalt verfügbar ist und in weiterer Folge ob bei Betätigung des Nothalt-Schaltmittels tatsächlich die Anlage stillgesetzt werden kann.

Die Erfindung betrifft ferner eine Bedienvorrichtung, insbesondere ein Handbediengerät für Roboter oder andere Maschinen mit Programmier- und/oder Bedienelementen zur Programmierung und/oder Steuerung von Bewegungsabläufen oder Betriebszuständen, wobei die Bedienvorrichtung ein erfindungsgemäßes Sicherheitsschaltelement umfasst.

Unterschiedliche Bedienvorrichtungen finden breiten Einsatz in technischen Anlagen zur Steuerung, Bedienung oder Programmierung von Maschinen, Robotern oder sonstigen Anlagenteilen. Um einen hohen Komfort bei gleichzeitig hoher Sicherheit für einen Bediener zu erreichen, wird vorteilhafterweise ein gegenständliches Sicherheitsschaltelement auf der Bedienvorrichtung angeordnet.

Bei einer Bedienvorrichtung kann es sich um eine stationäre oder mobile Bedienvorrichtung handeln.

Vorteilhaft ist hierbei auch, dass durch die Kombination aus Nothalt-Schaltmittel und Zustimmtaster, der Platzbedarf wesentlich geringer ausfällt als bei separat bzw. getrennt angeordneten Schaltelementen. Weiters ist für den Bediener eine sehr gute Übersichtlichkeit gegeben, nachdem die Anordnung mehrerer Bedien- und Schaltelemente kompakter ausfällt.

Weiters betrifft die Erfindung ein Verfahren zum Überführen einer Maschine oder eines Roboters in einen sicheren Betriebszustand mit einem erfindungsgemäßen Sicherheitsschaltelement, wobei die Verstellung eines Nothalt-Schaltmittels in einen Aktivzustand (A) durch Betätigung eines Zustimmtasters erfolgt.

Vorteilhafterweise wird hierbei einem Bediener ermöglicht, dass er während der Durchführung von Programmier- oder Einstellungshandlungen an einer Maschine oder einem Roboter, schnell und einfach, ohne Umgreifen beim Halten des Zustimmungszustandes (Z), einen Nothalt-Aktivzustand (A) herbeiführen kann, indem der Zustimmtaster mit einer zweiten Betätigungskraft betätigt wird.

Darüber hinaus ist vorgesehen, dass ein Aktivzustand (A) des Nothalt-Schaltmittels durch Aufbringung einer zweiten Betätigungskraft auf das Zustimmtaster-Betätigungsorgan eingenommen wird.

Ein Bediener braucht hierbei nicht auf ein separates Nothalt-Schaltmittel umgreifen, sondern kann schnell und einfach auf eine mögliche sicherheitskritische Situation reagieren, indem der Bediener eine zu einer ersten Betätigungskraft höhere, zweite Betätigungskraft auf das Zustimmtaster-Betätigungsorgan aufbringt.

Weiters kann eine Maschine oder ein Roboter durch Aktivierung des Nothalt Aktivzustand (A) in einen sicheren Betriebszustand überführt werden. Dieser Zustand kann auch als Nothalt oder Notstopp Zustand bezeichnet werden, in welchem die Maschine oder der Roboter sofort anhält und in dieser Position verharrt. Je nach Maschine oder Robotertyp können mechanische Bremsen einfallen und/oder die Maschine energielos geschaltet werden. Dieser Modus kann nur durch das Deaktivieren des Nothalt-Aktivzustandes (A), bzw. Überführen des Nothalt-Schaltmittels vom Aktivzustand (A) in den Inaktivzustand (I) verlassen werden.

Grundsätzlich kann an einer Maschine oder einem Roboter zwischen einem "Manuellen Betriebsmodus" und einem "Automatikmodus" unterschieden werden bzw. umgeschaltet werden. Hierzu kann ein Betriebswahlschalter vorgesehen sein.

Automatikmodus bedeutet, dass eine Maschine einen vorgegebenen Programmablauf in einer Schleife kontinuierlich durchführt. In diesem Modus kann der Bediener die Maschinenbewegungen nicht manipulieren. Weiters kann der Bediener im Notfall durch Betätigen des Nothalt-Schaltmittels und Aktivieren des Nothalt-Aktivzustandes (A) den Roboter in einen sicheren Betriebszustand überführen.

Im manuellen Betriebsmodus kann der Bediener gefahrenbringende Bewegungen des Roboters oder der Maschine durch aktives Halten des Zustimmtasters im Zustimmungszustand (Z) auslösen. Die ausgelöste Bewegung stoppt sofort, wenn der Zustimmungszustand (Z) in den Ruhezustand (R), in den Nothalt-Aktivzustand (A). in den System-Nothalt-Aktivzustand (As) bzw. in den System-Panikzustand (Ps) wechselt.

Des Weiteren kann vorgesehen sein, dass bei Vorliegen des Aktivzustandes (A) der Mitnehmer die Betätigung des Zustimmtasters in den Zustimmungszustand (Z) blockiert.

Über einen Mitnehmer kann der Zustimmtaster verschoben werden, womit eine mögliche Betätigung des Zustimmtasters in einen Zustimmungszustand (Z) verhindert und eine mögliche sicherheitskritische Situation hintangehalten werden kann.

Gemäß einer besonderen Ausprägung ist es möglich, dass nach der Betätigung des Nothalt-Schaltmittels ein Aktivzustand (A) eingenommen bleibt, wobei das Nothalt-Schaltmittel in einer Nothalt-Rastposition verriegelt bleibt.

Damit werden sämtliche sicherheitskritische Roboter- oder Maschinenoperationen gestoppt, wobei der Normalbetrieb ausschließlich durch eine bewusst durchgeführte Rückstellung des Nothalt-Schaltmittels erfolgen kann. Der Nothalt-Aktivzustand (A) kann somit solange aufrecht bleiben, bis eine möglicherweise sicherheitskritische Situation oder ein gefährlicher Zustand für den Bediener behoben ist.

Vorteilhaft ist auch eine Ausprägung, gemäß welcher vorgesehen sein kann, dass während sich das Nothalt-Schaltmittel im Aktivzustand (A) befindet, vom System der System-Nothalt-Aktivzustand (As) eingenommen bleibt und alle Schaltzustände des Zustimmtasters (Zustimmungszustand (Z), Ruhezustand (R)) zu keiner Änderung des System-Nothalt-Aktivzustandes (A_{S}) führen.

Mit dieser Maßnahme kann weiterhin eine unbeabsichtigte bzw. sicherheitskritische Betätigung des Zustimmtasters bzw. Einnahme des System-Zustimmungszustandes (Zs) während des Nothalt-Aktivzustandes (A) verhindert bzw. hintangehalten werden.

Entsprechend einer vorteilhaften Weiterbildung kann vorgesehen sein, dass bei Betätigung des Nothalt-Schaltmittels zumindest ein Nothaltsicherheitskreis zur Einnahme des Aktivzustandes (A) geöffnet wird.

Vorteilhafterweise sind Sicherheitsschaltkreise mehrkreisig ausgeführt, wobei einer von allen Kreisen mittels einem oder mehrerer Öffner-Kontakte geöffnet werden muss um einen Nothalt-Aktivzustand (A) herbeizuführen.

Insbesondere kann es vorteilhaft sein, wenn durch Aufbringung einer zweiten Betätigungskraft auf das Zustimmtaster-Betätigungsorgan zumindest ein Zustimmtastersicherheitskreis zur Einnahme des Aktivzustandes (A) geöffnet wird.

Der Bediener kann hierbei im Zuge der Betätigung des Zustimmtaster-Betätigungsorgans schnell und einfach einen Nothalt-Aktivzustand (A) aktivieren.

Ferner kann vorgesehen sein, dass im Aktivzustand (A) der Zustimmtaster in einem Ruhezustand (R) verweilt und/oder ein Zustimmungszustand (Z) bzw. System-Zustimmungszustand (Zs) aufgehoben wird.

Somit werden sicherheitskritische Situationen weiterhin hintangehalten, da im Nothalt-Aktivzustand (A) keine Betätigung des Zustimmtasters möglich ist, bzw. die Betätigung des Zustimmtasters ignoriert wird oder eine Betätigung des Zustimmtasters keine Wirkung hat. Insbesondere wird die gleichzeitige Aktivierung des Zustimmungszustandes (Z) während des Nothalt-Aktivzustandes (A) verhindert oder ignoriert.

Darüber hinaus kann vorgesehen sein, dass ein Nothalt-Schaltzustand und/oder ein Zustimmtaster-Schaltzustand von einer Auswertelogik ermittelt wird.

Mittels der Auswertelogik kann zwischen einem aktivierten Nothalt-Aktivzustand (A), einem System-Panikzustand (Ps) und einem System-Nothalt-Aktivzustand (As) unterschieden werden, weil
1. der System-Nothalt-Aktivzustand (As) durch Berühren des Nothalt-Schaltmittel allein aktiviert wurde, weil nur der Betätigungsbereich des Nothalt-Schaltmittels berührt wurde;
2. der System-Nothalt-Aktivzustand (As) indirekt aktiviert wurde, durch schnelles Durchdrücken des Zustimmtaster-Betätigungsorgans über den Zustimmungszustand (Z) in den Nothalt-Aktivzustand (A) innerhalb von z.B. 0,5 Sekunden, wobei der System-Zustimmungszustand (Zs) nicht aktiviert sondern sofort der System-Nothalt-Aktivzustand (As) aktiviert wurde;
3. der System-Panikzustand (Ps) aktiviert wurde, weil zuvor für eine längere Zeitspanne z.B. >0,5 Sekunden der Zustimmtaster in dem Zustimmungszustand (Z) gehalten wurde und somit das System in den System-Zustimmungszustand (Zs) gewechselt hat, bevor das System in den System-Panikzustand (Ps) gewechselt hat.

Basierend auf diesen Informationen können an der Maschine wiederum unterschiedliche Stopp-Funktionen ausgelöst werden.

Dem Sicherheitsfachmann sind die Stopp-Kategorien 0, 1 und 2 bekannt. Bei der Stopp-Kategorie 0 oder SS0-Stopp erfolgt eine sofortige Wegnahme der Antriebsenergie, was gegebenenfalls mit dem Einfallen von mechanischen Bremsen kombiniert werden kann. Bei der Stopp-Kategorie 1 oder SS1-Stopp erfolgt ein schnelles, geregeltes Stillsetzen der Maschine, was gegebenenfalls mit dem Einfallen von mechanischen Bremsen kombiniert werden kann und einer anschließenden Wegnahme der Antriebsenergie. Bei der Stopp-Kategorie 2 erfolgt ein schnelles, geregeltes Stillsetzen der Maschine wobei die Antriebsenergie nicht weggenommen wird, sondern nur der Stillstand überwacht werden muss.

Für die Zustände System-Nothalt-Aktivzustand (As) und System-Panikzustand (Ps) kann zwischen der Stopp-Kategorie 0 und 1 gewählt werden.

Der von der Auswertelogik ermittelte Schaltzustand kann in weiterer Folge über eine Schnittstelle an eine weitere Komponente einer technischen Anlage, wie beispielsweise eine Bedienvorrichtung übergeben werden. Damit ist eine weitere Visualisierung oder Darstellung eines Schaltzustandes, beispielsweise in Form einer Ausgabe auf einem Display denkbar.

Ferner kann es zweckmäßig sein, wenn die Auswertelogik einen System-Fehlerzustand (Fs) ermittelt, wenn ausgehend vom Aktivzustand (A) des Nothalt-Schaltmittels der Inaktivzustand (I) aktiviert wird, wobei der Zustimmungszustand (Z) aktiv ist.

Mithilfe der Auswertelogik kann ferner bei gleichzeitiger Deaktivierung des Nothalt-Aktivzustandes und Vorliegen des Zustimmungszustandes (Z) der System-Fehlerzustand (Fs) ausgegeben werden, bis der Zustimmtaster vom Zustimmungszustand (Z) in den Ruhezustand (R) überführt wird. Ferner kann das System bei Vorliegen des System-Fehlerzustands (Fs) den System-Nothalt-Aktivzustand (As) einnehmen, welcher aufrecht bleibt, bis der Zustimmtaster vom Zustimmungszustand (Z) in den Ruhezustand (R) überführt wird. Der System-Fehlerzustand (Fs) kann mittels einer Visualisierung oder Darstellung eines Fehlerzustandes, beispielsweise in Form einer Ausgabe auf einem Display ausgegeben werden.

Vorteilhaft ist auch eine Ausprägung, gemäß welcher vorgesehen sein kann, dass eine Betätigungsdauer des Zustimmtasters mit der ersten und/oder zweiten Betätigungskraft mittels einer Messvorrichtung ermittelt wird.

Abgeleitet von der Betätigungsdauer des Zustimmtasters kann unterschieden werden, ob ein System-Nothalt-Aktivzustand (As) oder ein System-Panikzustand (Ps) vorliegt. In einem System-Panikzustand (Ps) ist weiterhin eine zum System-Nothalt-Aktivzustand (As) abweichende Überführung einer Maschine oder eines Roboters in einen sicheren Zustand denkbar.

Gemäß einer Weiterbildung ist es möglich, dass mittels einer mit der Auswertelogik gekoppelten Zustands- Steuervorrichtung im Aktivzustand (A) des Nothalt-Schaltmittels, wodurch sich das System im System-Nothalt-Aktivzustand (As) befindet, alle möglichen Betätigungszustände des Zustimmtasters (Zustimmungszustand (Z), Ruhezustand (R)), zu keiner Änderung des System-Nothalt-Aktivzustandes (As) führen.

Mithilfe der Auswertelogik wird vorteilhafterweise bei Vorliegen der Nothalt-Rastposition bzw. des Nothalt-Aktivzustandes (A) ein Überführen des Zustimmtasters in den Zustimmungszustand (Z) bzw. System-Zustimmungszustand (Zs) verhindert. Auch wird dabei die Einnahme des System-Zustimmungszustandes (Zs) verhindert, solange sich das System im System-Nothalt-Aktivzustand (As) befindet.

Gemäß einer besonderen Ausprägung ist es möglich, dass das Nothalt-Schaltmittel mit einer Beleuchtungseinheit farbig hinterleuchtet wird, wobei einem Bediener die Verfügbarkeit des Nothalt-Schaltmittels signalisiert wird.

Vorteilhafterweise kann hierbei durch eine Farbänderung dem Benutzer die Verfügbarkeit des Sicherheitsschaltelements bzw. des Nothalt-Schaltmittels signalisiert werden. Mit der Hinterleuchtung durch die Beleuchtungseinheit erscheint das Schaltmittel beispielsweise rot-gelb und ohne Hinterleuchtung erscheint das Schalmittel beispielsweise gelb-grau. Anhand der Farbgebung kann der Benutzer unterscheiden, ob der Nothalt verfügbar ist und in weiterer Folge ob bei Betätigung des Nothalt-Schaltmittels tatsächlich die Anlage stillgesetzt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: Eine beispielhafte Ausführungsform einer technischen Anlage, welche mittels Bedienvorrichtungen bedien- bzw. beeinflussbar ist;
- Fig. 2: eine mögliche Ausführungsform einer Bedienvorrichtung mit einem Sicherheitsschaltelement;
- Fig. 3: eine weitere mögliche Ausführungsform einer Bedienvorrichtung mit einem Sicherheits schaltelement;
- Fig. 4: a und b eine mögliche Ausführungsform eines Sicherheitsschaltelements in einer Draufsicht und einer Seitenansicht;
- Fig. 5: a und b eine weitere mögliche Ausführungsform eines Sicherheitsschaltelements in einer Draufsicht und einer Seitenansicht;
- Fig. 6: a bis c eine mögliche Ausführungsform eines Sicherheitsschaltelements in unterschiedlichen Schaltzuständen;
- Fig. 7: a bis c eine weitere mögliche Ausführungsform eines Sicherheitsschaltelements in unterschiedlichen Schaltzuständen;
- Fig. 8: a bis c eine weitere mögliche Ausführungsform eines Sicherheitsschaltelements in unterschiedlichen Schaltzuständen;
- Fig. 9: a bis c eine weitere mögliche Ausführungsform eines Sicherheitsschaltelements in unterschiedlichen Schaltzuständen;
- Fig. 10: a bis c eine weitere mögliche Ausführungsform eines Sicherheitsschaltelements in unterschiedlichen Schaltzuständen;
- Fig. 11: eine weitere mögliche Ausführungsform eines Sicherheitsschaltelements;
- Fig. 12: a bis e ein Sicherheitsschaltelement gemäß Fig. 11 in unterschiedlichen Schaltzuständen;
- Fig. 13: eine weitere mögliche Ausführungsform eines Sicherheitsschaltelements;
- Fig. 14: a bis e ein Sicherheitsschaltelement gemäß Fig. 13 in unterschiedlichen Schaltzuständen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

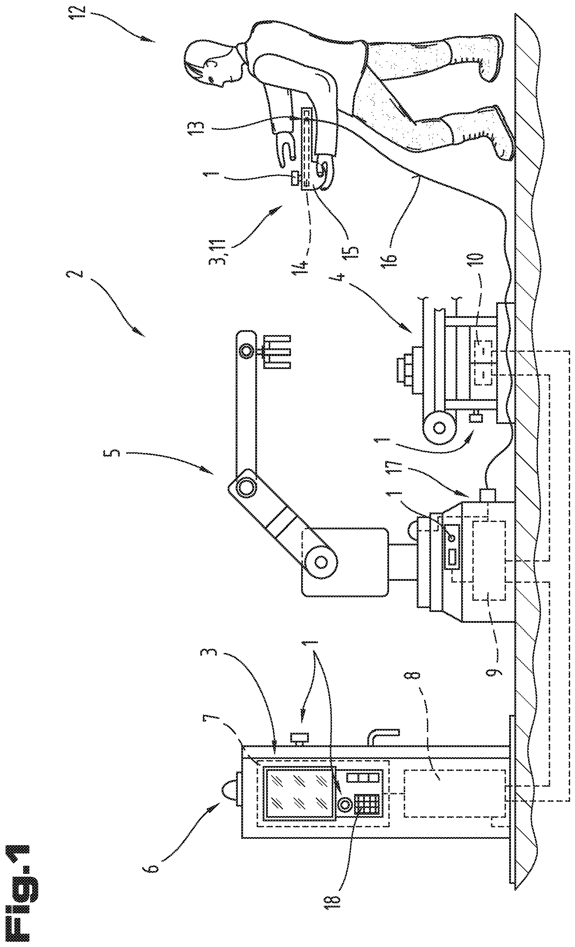

In der Fig. 1 ist eine beispielhafte Ausführungsform der Anordnung von Sicherheitsschaltelementen 1 in einer technischen Anlage 2 dargestellt, wobei die technische Anlage 2 mittels einer Bedienvorrichtung 3 bedien- bzw. beeinflussbar ist.

Die technische Anlage 2 ist zur automatischen, halbautomatischen und/oder manuellen Behandlung oder Bearbeitung von Objekten bzw. Werkstücken ausgebildet. Gleichfalls kann eine technische Anlage 2 in der Art ausgebildet sein, sonstige technische Prozesse automatisiert ausführen bzw. überwachen zu können.

Die technische Anlage 2 kann dabei einen oder mehrere elektrisch gesteuerte Maschinen 4, wie z.B. Bearbeitungsmaschinen oder Förder- bzw. Transportvorrichtungen und/oder Roboter 5 bzw. sonstige Manipulatoren oder dgl., umfassen.

Neben diversen mechanischen Komponenten weist die technische Anlage 2 weiters wenigstens eine elektrische bzw. elektronische oder hydraulische Steuereinrichtung 6 auf, welche eine zentrale Steuervorrichtung 7 oder mehrere dezentrale, miteinander verbundene oder vernetzte Steuervorrichtungen 8 , 9, 10 für diverse Anlagenteile, beispielsweise für eine Maschine 4 und/oder einen Roboter 5, umfasst. Die dezentralen Steuervorrichtungen 8 , 9, 10 sind dabei bevorzugt direkt dem zu steuernden Anlagenteil zugeordnet oder in der Nähe davon angeordnet.

An die Steuereinrichtung 6 der elektromechanischen Anlage 2 ist wenigstens eine Bedienvorrichtung 3, wie ein mobiles Handbediengerät 11 anbindbar. Das Handbediengerät 11 ist dabei bevorzugt derart kompakt und leichtgewichtig aufgebaut, dass es von einem befugten Bediener 12 der Anlage 2 mühelos tragbar ist.

Zur bedarfsweisen bzw. zeitweiligen Verbindung des Handbediengeräts 11 mit der Steuereinrichtung 6 oder wenigstens einer der Steuervorrichtungen 7, 8 , 9, 10 der technischen Anlage 2, weist das Handbediengerät 11 wenigstens eine Schnittstelle 13 auf. Diese Schnittstelle 13 ist üblicherweise an einer Steuervorrichtung 14 des Handbediengeräts 11 ausgebildet. Diese Steuervorrichtung 14 ist bevorzugt im Inneren eines Gehäuses 15 des Handbediengerätes 11 aufgenommen und so vor direktem Zugriff von außen geschützt.

Die Schnittstelle 13 kann dabei zum Aufbau einer drahtgebundenen Verbindung via ein Kabel 16 und/oder zum Aufbau einer drahtlosen Wirkverbindung zur Steuereinrichtung 6 oder zu wenigstens einer der Steuervorrichtungen 7, 8 , 9, 10 der Anlage 2 ausgebildet sein. Via diese wenigstens eine drahtlose und/oder drahtgebundene Schnittstelle 13 am Handbediengerät 11 ist dieses also daten- bzw. signaltechnisch an die Steuereinrichtung 6 oder an einzelne der Steuervorrichtungen 7, 8 , 9, 10 bedarfsweise anbindbar. Hierfür ist an der Steuereinrichtung 6 oder an wenigstens einer der Steuervorrichtungen 7, 8 , 9, 10 der technischen Anlage 2 wenigstens eine damit korrespondierende Schnittstelle 17 ausgebildet.

Das mobile Handbediengerät 11 dient zumindest zur Beeinflussung der Betriebsfunktionen bzw. Arbeitsweise einer Maschine 4, eines Roboters 5 oder sonstiger technischer Anlagenteile eines allgemeinen technischen Prozess. Zusätzlich kann das Handbediengerät 11 zur Visualisierung von Prozessdaten und/oder zur Beobachtung von Arbeitsweisen einer technischen Anlage ausgebildet sein. Derartige Prozessbeeinflussungen bzw. Prozessvisualisierungen sind dabei nur dann möglich, wenn das mobile Handbediengerät 11 über die Schnittstelle 13 mit der korrespondierenden Schnittstelle 17 der jeweiligen Anlage 2 bzw. des jeweiligen Anlagenteils in ordnungsgemäßer daten- bzw. signaltechnischer Wirkungsverbindung steht.

Alternativ oder in Kombination zu wenigstens einem der zuvor genannten Verwendungszwecke kann das Handbediengerät 11 auch zur Programmierung der Abläufe, insbesondere der Bewegungs- bzw. Steuerabläufe, von mit Aktoren bzw. Sensoren versehenen Maschinen 4 oder Robotern 5 dienen. In einem derartigen Programmiermodus des Handbediengerätes 11 kann beispielsweise ein sogenanntes "Teaching" von Maschinen 4 oder Robotern 5 vorgenommen werden. Die dabei in einem Speicher hinterlegten Steuerungs- bzw. Bewegungsabläufe können nachfolgend von der Maschine 4 oder dem Roboter 5 selbsttätig bzw. automatisiert ausgeführt werden.

Am Handbediengerät 11 ist weiters ein Sicherheitsschaltelement 1 zur Verwendung in Kombination mit Programmier- und/oder Bedienelementen 18 einer Maschinen- bzw. Robotersteuerung für manuelle Steuer- bzw. Programmiervorgänge an Maschinen 4 oder Robotern 5 vorgesehen.

Sicherheitsschaltelemente 1 sind gemäß dem in Fig. 1 dargestellten Ausführungsbeispiel auch an der Steuereinrichtung 6, am Roboter 5 und der Maschine 4 vorgesehen um direkt sicherheitsrelevante bzw. sicherheitskritische Befehle eingeben zu können oder eine Maschine 4, einen Robotern 5 oder einen sonstigen Anlagenteil in einen sicheren Zustand zu überführen.

Die Sicherheitsschaltelemente 1 umfassen jeweils ein Nothalt-Schaltmittel 19 wobei das Nothalt-Schaltmittel 19 die wechselweise Einnahme der Nothalt-Schaltzustände Inaktivzustand (I) und Aktivzustand (A) ermöglicht und einen Zustimmtaster 20, wobei der Zustimmtaster 20 die wechselweise Einnahme wenigstens zweier Zustimmtaster-Schaltzustände, wie Ruhezustand (R) und Zustimmungszustand (Z) ermöglicht.

Nachdem Bedienvorrichtungen 3, wie Handbediengeräte 11, Steuereinrichtungen 6, Roboter 5 oder Maschinen 4 oftmals eingeschränkte Platziermöglichkeiten für Schaltelemente wie Bedienelemente 18, Nothalt-Schaltmittel 19 oder Zustimmtaster 20 aufweisen, ist das Sicherheitsschaltelement 1 als kombiniertes Schaltelement ausgeführt. Der Zustimmtaster 20 ist dabei lastabtragend am Nothalt-Schaltmittel 19 abgestützt.

Mit dem Sicherheitsschaltelement 1 kann also bei Betätigung des Nothalt-Schaltmittels 19 nötigenfalls ein sofortiger Stopp bzw. Nothalt wenigstens von einem Teil einer funktional daran angebundenen Maschine 4, eines Roboters 5 oder eines technischen Prozesses eingeleitet werden. Dieses Nothalt-Schaltmittel 19 ist vor allem vorgesehen, um sicherheitskritische oder gefahrbringende Situationen innerhalb der technischen Anlage 2 abzuwenden bzw. augenblicklich abzustellen. Gegenständliche Sicherheitsschaltelemente 1 sind üblicherweise auch an sonstigen Anlagenteilen gut einsehbar und leicht zugreifbar angeordnet, um notfalls rasch erreicht und betätigt werden zu können.

Die Sicherheitsschaltelemente 1 sind dabei in einen allgemein bekannten, nicht näher dargestellten Sicherheitsschaltkreis der Steuereinrichtung 6 eingebunden, welcher im Wesentlichen bewirkt, dass beim Vorliegen eines Nothalt-Aktivzustandes (A) wenigstens die betroffenen, sicherheitskritischen Teile der Anlage 2 abgeschaltet bzw. energielos geschaltet werden. Das Sicherheitsschaltelement 1 am Handbediengerät 11 ist hierzu über die Schnittstelle 13 oder gegebenenfalls über ein eigenständiges Interface in den Sicherheitsschaltkreis der Steuereinrichtung 6 bzw. der technischen Anlage 2 einbindbar bzw. zumindest wirkungstechnisch mit diesem verbindbar.

Mittels dem im Sicherheitsschaltelement 1 vorgesehenen, bzw. am Nothalt-Schaltmittel 19 lastabtragend abgestützten Zustimmtaster 20, können des weiteren sicherheitskritische Bewegungen bzw. Funktionen ausgeführt werden können, wenn der Zustimmtaster 20 in vordefinierter Art und Weise betätigt ist. Mit dem Zustimmtaster 20 kann also vermieden werden, dass sicherheitskritische bzw. gefährliche Funktionen, insbesondere Bewegungsfunktionen, unbeabsichtigt bzw. ungewollt ausgeführt werden. Insbesondere werden ausschließlich bei bewusster, definierter Betätigung Zustimmtasters 20 die entsprechenden Steuerbefehle über die Schnittstelle 13 von einem Bedienelement 18 und/oder von einer sonstigen Bewegungssteuervorrichtung an die Steuereinrichtung 6 der technischen Anlage 2 übermittelt bzw. ist nur bei entsprechender Betätigung eine Ausführung bzw. Umsetzung derselben via die Steuereinrichtung 6 freigegeben. Der Zustimmtaster 20 ist dabei von einem Finger oder mehreren Fingern einer Hand eines Bedieners 12 betätigbar. Der Zustimmtaster 20 kann auch als "Hold-to-Run" Taste bezeichnet werden, weil eine Funktion nur und so lange ausgeführt wird, wie diese Taste gedrückt wird.

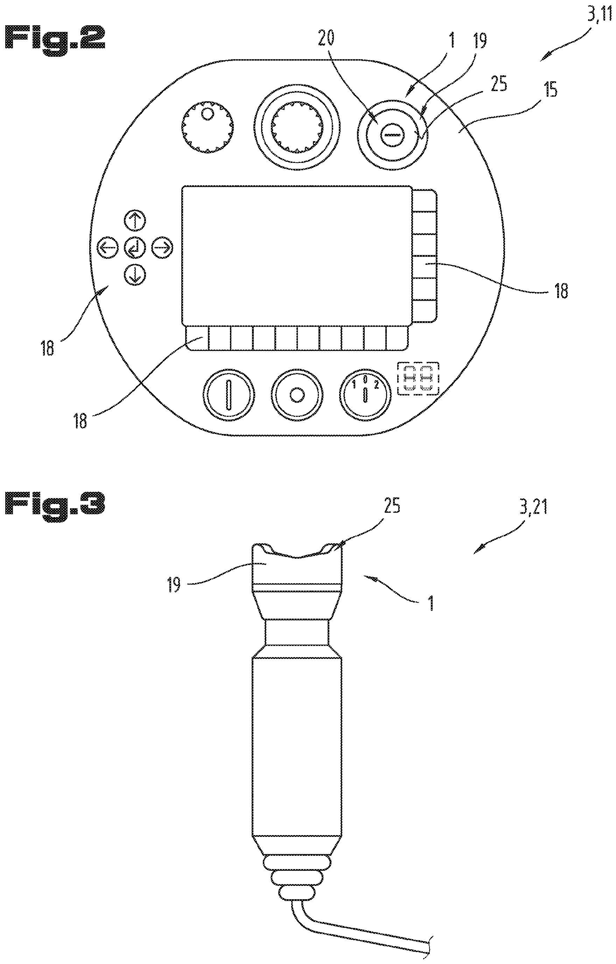

In der Fig. 2 ist eine mögliche Ausführungsform einer Bedienvorrichtung 3 mit einem Sicherheitsschaltelement 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Bei der in Fig. 2 dargestellten Bedienvorrichtung 3 handelt es sich um ein Handbediengerät 11 zur Beeinflussung von Bewegungs- bzw. Funktionsabläufen eines technischen Prozesses bzw. einer technischen Anlage 2. Hierzu ist am Handbediengerät 11 zumindest ein Bedienelement 18 ausgebildet. Dieses wenigstens eine Bedienelement 18 kann aber auch genutzt werden, um interne Abläufe bzw. Betriebszustände des Handbediengeräts 11 selbst beeinflussen, verändern bzw. einstellen zu können. Das Bedienelement 18 ist also zumindest zur Bedienung einer technischen Anlage 2 oder von Anlagenteilen und bevorzugt auch zur Beeinflussung der Betriebsfunktionen des Handbediengeräts 11 vorgesehen.

Zusätzlich zu den allgemeinen Bedienelementen 18 zur Eingabe von Steuerbefehlen, zur Auswahl von Betriebsfunktionen oder zur Navigation in Funktionsmenüs des Handbediengerätes 11 ist wenigstens ein rasch und sicher zugreifbares Sicherheitsschaltelement 1 mit einem Nothalt-Schaltmittel 19 und einem Zustimmtaster 20 ausgebildet.

Das Nothalt-Schaltmittel 19 ermöglicht hierbei die wechselweise Einnahme der Nothalt-Schaltzustände Inaktivzustand (I) und Aktivzustand (A) und der Zustimmtaster 20 die wechselweise Einnahme wenigstens zweier Zustimmtaster-Schaltzustände, wie Ruhezustand (R) und Zustimmungszustand (Z). Die Schaltzustände können hierbei an eine an das Handbediengerät 11 angebundene technische Anlage 2 bereitgestellt werden.

Insbesondere wird bei Betätigung des Nothalt-Schaltmittels 19 die gesamte, an das Handbediengerät 11 signal -bzw. datentechnisch angebundene technische Anlage 2 oder wenigstens ein sicherheitskritischer Anlagenteil in einen sicheren Zustand versetzt. Ein sicherer Betriebszustand einer Anlage 2, einer Maschine 4, eines Roboters 5 oder dgl. ist beispielsweise dann gegeben, wenn potentiell gefährdende Vorgänge für Lebewesen oder Objekte, speziell bestimmte Bewegungsvorgänge, wirksam unterbunden werden. Dies geschieht in vielen Fällen durch eine Unterbrechung der Energiezufuhr zu den Aktoren bzw. Antriebsaggregaten der Anlage bzw. des jeweiligen Anlagenteils.

Das Sicherheitsschaltelement 1 des Handbediengerätes 11 ist während dem funktionsfähigen Betriebszustand in den Sicherheitsschaltkreis der technischen Anlage eingebunden oder daran angebunden.

Durch manuelle Betätigung von einem am Handbediengerät 11 oder an einer sonstigen Stelle der technischen Anlage angeordneten und an den Sicherheitsschaltkreis angeschlossenen Nothalt-Schaltmittel 19 wird die jeweilige Maschine 4 oder der entsprechende Maschinenteil augenblicklich in einen sicheren Zustand überführt. Dieser sichere Betriebszustand bleibt aufrecht, bis alle Nothalt-Schaltmittel 19 einer Anlage oder eines Anlagenteils bewusst wieder in einen unbetätigten Zustand zurückgeführt werden. Die Überführung in den unbetätigten Zustand erfolgt im Allgemeinen manuell durch vordefiniertes Drehen und/oder Ziehen an einem Nothalt-Schaltmittel 19 des aktivierten Sicherheitsschaltelements 1. Der Nothalt Aktivzustand (A) muss also bis zu seiner manuellen Rückstellung aufrechterhalten bleiben.

In der Fig. 3 ist eine weitere und gegebenenfalls für sich eigenständige Ausführungsform einer Bedienvorrichtung 3 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei der in Fig. 3 dargestellten Bedienvorrichtung 3 handelt es sich um einen sogenannten Zustimmknochen 21 mit einem Sicherheitsschaltelement 1. Durch Betätigung eines Zustimmtasters 20 können im Wesentlichen die Zustimmtaster-Schaltzustände Ruhezustand (R) und Zustimmungszustand (Z) eingenommen werden. In einem Zustimmungszustand (Z) wird beispielsweise ein Anlagenteil aktiv verfahren oder bewegt, bzw. eine Teachingoperation durchgeführt.

Kommt es nun im Zuge einer Bedienhandlung durch einen Bediener 12 einer technischen Anlage 2 zu einer sicherheitskritischen Situation, so muss die Anlage 2 schnell in einen sicheren Zustand überführt werden. Hierzu kann der Bediener 12 einerseits ein Nothalt-Schaltmittel 19 am Sicherheitsschaltelement 1 betätigen oder den Zustimmtaster 20 mit einer höheren zweiten Betätigungskraft, wobei durch beide Bedienhandlungen ein Nothalt Aktivzustand (A) hervorgerufen wird.

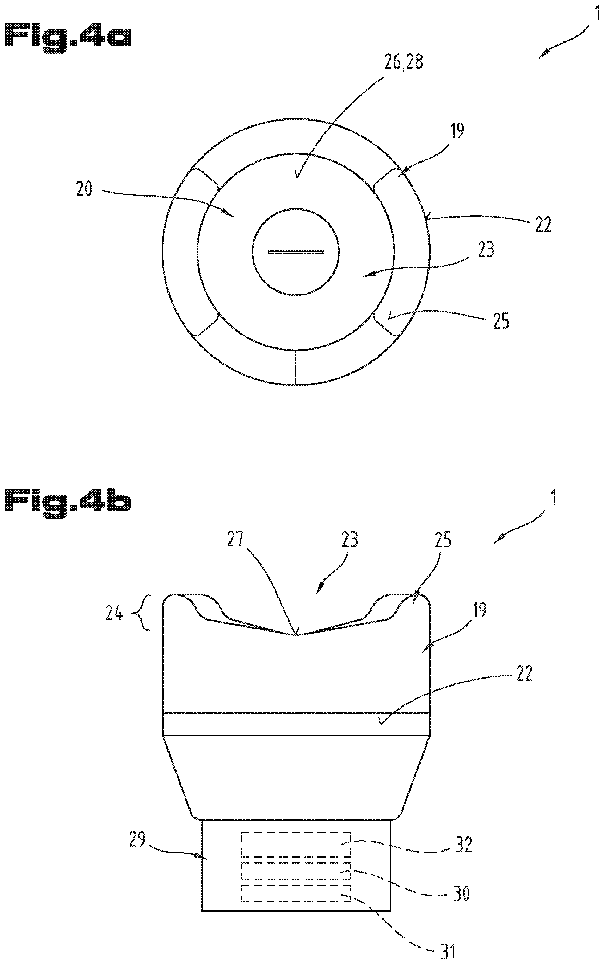

In der Fig. 4 ist eine mögliche Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Fig. 4a zeigt dabei eine Draufsicht des Sicherheitsschaltelements 1 und Fig. 4b eine Seitenansicht des Sicherheitsschaltelements 1.

Ein Nothalt-Schaltmittel 19 des Sicherheitsschaltelements 1 umfasst, wie in Fig. 4a ersichtlich ist, eine umlaufende, hohlzylindrische Seitenwandung 22, welche einen Hohlraum 23 begrenzt, in welchem der Zustimmtaster 20 aufgenommen ist. Der Zustimmtaster 20 ist hierbei konzentrisch innerhalb der Seitenwandung 22 des Nothalt-Schaltmittels 19 angeordnet.

Aus der Fig. 4b geht weiterhin hervor, dass in einem oberen Wandbereich 24 der Seitenwandung 22 des Nothalt-Schaltmittels 19, ein umlaufender Betätigungsschutzkragen 25 ausgebildet ist, welcher ein Zustimmtaster-Betätigungsorgan 26 des Zustimmtasters 20 zumindest abschnittsweise überragt.

Hiermit kann verhindert werden, dass bei Schlagen bzw. kräftiger Betätigung des Nothalt-Schaltmittels 19 eine unbeabsichtigte Betätigung des Zustimmtasters 20 erfolgt.

Der Betätigungsschutzkragen 25 weist hierbei an zwei gegenüberliegenden Seiten jeweils eine Ausnehmung 27 auf, wobei der Betätigungsschutzkragen 25 im Bereich der Ausnehmung 27 zumindest abschnittsweise im Wesentlichen flächenbündig mit der Oberfläche 28 des Zustimmtaster-Betätigungsorgans 26 ausgeführt ist. Damit wird eine bewusste Betätigung des Zustimmtasters 20 durch einen Bediener 12 ermöglicht. Zur komfortablen Bedienung des Zustimmtasters 20 ist ein einfaches Durchführen eines Fingers bzw. ein Einlegen eines Fingers in die Ausnehmung 27 möglich.

In einem Schaltersockel 29 ist ferner zumindest ein Nothaltsicherheitskreis 30, zumindest ein Zustimmtastersicherheitskreis 31 und eine Auswertelogik 32 und/oder Schnittstelle zu einer Auswertelogik 32 vorgesehen, welche dazu ausgebildet ist, den Nothalt-Schaltzustand bzw. den Zustimmtaster-Schaltzustand zu ermitteln. Die Auswertelogik 32 ist dabei ferner dazu ausgebildet die Systemzustände System-Nothalt-Aktivzustand (As), System-Zustimmungszustand (Zs), System-Panikzustand (Ps) und System-Ruhezustand (Rs) zu ermitteln.

Die Auswertelogik 32 ist hierbei teilweise in dem Schaltersockel 29 aufgenommen. Über eine Schnittstelle zur Auswertelogik 32 kann ferner der Zustand der Schaltkontakte 50, 51 an die Steuereinrichtung 6 übertragen werden. Die logische Auswertung der Zustände erfolgt extern, beispielweise in einer Steuereinrichtung 6 einer technischen Anlage oder in einer Steuervorrichtung 9, 10 einer Maschine 4 oder eines Roboters 5.

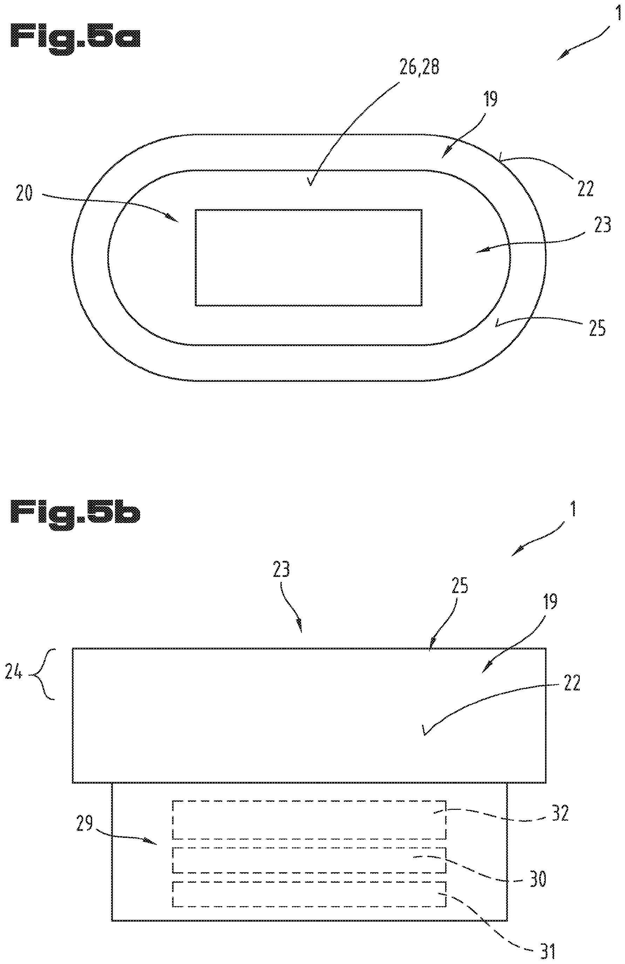

In der Fig. 5 ist eine weitere mögliche Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Fig. 5a zeigt dabei eine Draufsicht des Sicherheitsschaltelements 1 und Fig. 5b eine Seitenansicht des Sicherheitsschaltelements 1.

Ein Nothalt-Schaltmittel 19 des Sicherheitsschaltelements 1 umfasst, wie in Fig. 5a ersichtlich ist, eine umlaufende, im Wesentlichen ellipsenförmige Seitenwandung 22, welche einen Hohlraum 23 begrenzt, in welchem der Zustimmtaster 20 aufgenommen ist. Der Zustimmtaster 20 ist hierbei wiederum konzentrisch innerhalb der Seitenwandung 22 des Nothalt-Schaltmittels 19 angeordnet.

Aus der Fig. 5b geht weiterhin hervor, dass in einem oberen Wandbereich 24 der Seitenwandung 22 des Nothalt-Schaltmittels 19, ein umlaufender Betätigungsschutzkragen 25 ausgebildet ist, welcher ein Zustimmtaster-Betätigungsorgan 26 des Zustimmtasters 20 zumindest abschnittsweise überragt.

Hiermit kann verhindert werden, dass bei Schlagen bzw. kräftiger Betätigung des Nothalt-Schaltmittels 19 eine unbeabsichtigte Betätigung des Zustimmtasters 20 erfolgt. Zur Durchführung einer bewussten Betätigung des Zustimmtasters 20 durch einen Bediener 12, können einer oder mehrere Finger einer Hand das Zustimmtaster-Betätigungsorgan 26 betätigen, indem einer oder mehrere Finger in den Hohlraum 23 eingebracht werden.

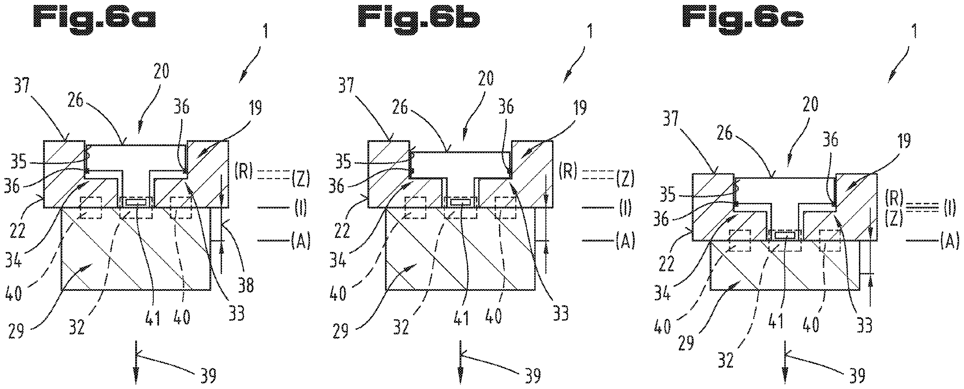

In der Fig. 6 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen. In den Fig. 6a bis 6c sind unterschiedliche Schaltzustände des Sicherheitsschaltelements 1 dargestellt.

Ein Zustimmtaster 20 ist lastabtragend auf einem Lastabtragungsbereich 33 eines Nothalt-Schaltmittels 19 des Sicherheitsschaltelements 1 abgestützt. Der Lastabtragungsbereich 33 ist dabei als ein Rücksprung 34 an einer Innenmantelfläche 35 der Seitenwandung 22 des Nothalt-Schaltmittels 19 ausgebildet.

Die in Fig. 6 eingezeichneten Schaltkontaktzustände Inaktivzustand (I) und Aktivzustand (A) des Nothalt-Schaltmittels 19 sind dabei jeweils auf die Unterkante des Nothalt-Schaltmittels 19 bezogen. Die Schaltkontaktzustände Ruhezustand (R) und Zustimmungszustand (Z) sind ebenfalls jeweils auf die Unterkante des Zustimmtasters 20 bezogen.

Das Nothalt-Schaltmittel 19 befindet sich gemäß der Darstellung in Fig. 6a in dem Inaktivzustand (I) und der Zustimmtaster (20) in dem Ruhezustand (R). Das Nothalt-Schaltmittel 19 umfasst ferner einen Mitnehmer 36 für den Zustimmtaster 20, wobei bei Betätigung eines Betätigungsbereiches 37 des Nothalt-Schaltmittels 19 entlang eines Betätigungsweges 38 in eine Betätigungsrichtung 39, der Zustimmtaster 20 entlang des Betätigungsweges 38 in die Betätigungsrichtung 39 verschoben wird. Der Zustimmtaster 20 wir somit passiv mitgenommen. Der Mitnehmer kann beispielsweise als Rasteinrichtung ausgebildet sein, welche durch eine erste Betätigungskraft 45 in einen Zustimmungszustand (Z) oder durch eine zweite Betätigungskraft 46 in einen Aktivzustand (A) des Nothalt-Schaltmittels 19 überwindbar ist.

Ferner umfasst das Nothalt-Schaltmittel 19 zumindest eine Nothalt-Rastvorrichtung 40 zum Einnehmen einer Nothalt-Rastposition, wobei die Nothalt-Rastposition im Aktivzustand (A) eingenommen bleibt. Hierbei erfolgt eine Verriegelung des Nothalt-Schaltmittels 19 an einem Schaltersockel 29, wobei eine Entriegelung nur durch eine bewusste Handlung eines Bedieners 12 durchgeführt werden kann. Bei einer Entriegelungshandlung kann es hierbei um ein Rotieren des Nothalt-Schaltmittels 19, um ein Ziehen des Nothalt-Schaltmittels 19 entgegen der Betätigungsrichtung 39 oder um ein gleichzeitiges Drücken und Rotieren des Nothalt-Schaltmittels 19 handeln.

In der Auswertelogik 32 kann auch eine Messvorrichtung 41 vorgesehen sein, um eine Betätigungsdauer des Zustimmtasters 20 zu ermitteln. Falls hierbei gleichzeitig eine zweite Betätigungskraft 46 auf ein Zustimmtaster-Betätigungsorgan 26 aufgebracht wird, wird der System-Zustimmungszustand (Zs) nicht eingenommen sondern sofort der System-Nothalt-Aktivzustand(As).

Das Nothalt-Schaltmittel 19 befindet sich gemäß der Darstellung in Fig. 6b in dem Inaktivzustand (I) und der Zustimmtaster 20 in einem Zustimmungszustand (Z). Der Zustimmungszustand (Z) ist durch Aufbringung der ersten Betätigungskraft 45 auf das Zustimmtaster-Betätigungsorgan 26 des Zustimmtasters 20 einnehmbar.

Gemäß der Darstellung in Fig. 6c befindet sich das Nothalt-Schaltmittel 19 in dem Aktivzustand (A) und der Zustimmtaster 20 in dem Ruhezustand (R). Der Aktivzustand (A) des Nothalt-Schaltmittels 19 ist durch Aufbringung einer zweiten Betätigungskraft 46 auf das Zustimmtaster-Betätigungsorgans 26 einnehmbar, wobei die erste Betätigungskraft 45 geringer gegenüber der zweiten Betätigungskraft 46 ist.

Alternativ dazu kann der Aktivzustand (A) auch durch Betätigung des Betätigungsbereiches 37 des Nothalt-Schaltmittels 19 aktiviert werden, wobei wiederum die zweite Betätigungskraft 46 überwunden wird.

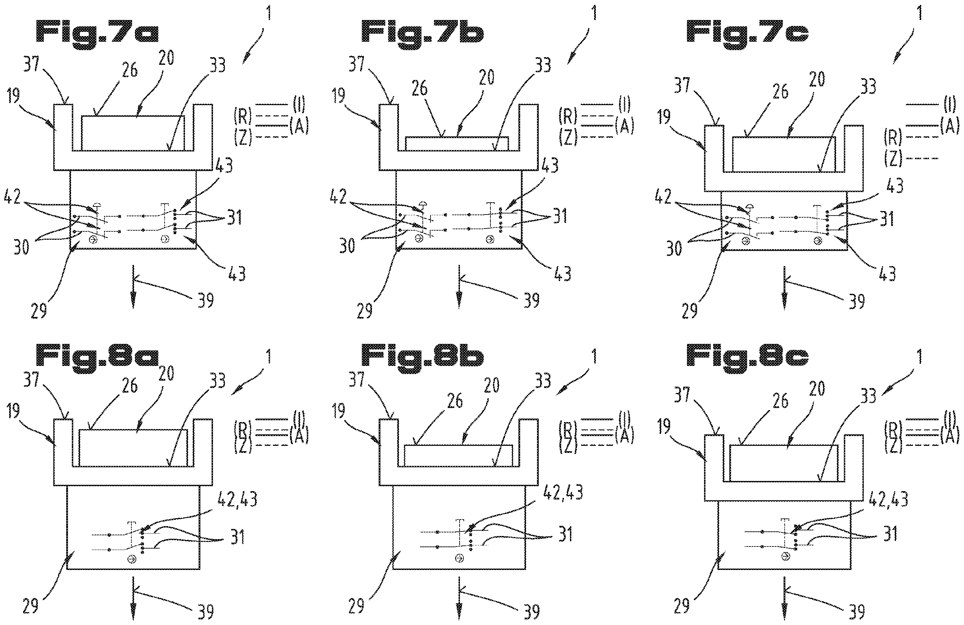

In der Fig. 7 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

In den Fig. 7a, 7b und 7c ist das Sicherheitsschaltelement 1 in unterschiedlichen Schaltzuständen dargestellt.

Die in Fig. 7 eingezeichneten Zustände Inaktivzustand (I) und Aktivzustand (A) des Nothalt-Schaltmittels 19 sind dabei jeweils auf die Oberkante des Nothalt-Schaltmittels 19 bezogen. Die Zustände Ruhezustand (R) und Zustimmungszustand (Z) sind ebenfalls jeweils auf die Oberkante des Zustimmtasters 20 bezogen.

Das Nothalt-Schaltmittel 19 ist dazu ausgebildet, zwei Zwangs-Öffner-Kontakte 42 zu betätigen, welche dazu ausgebildet sind, zwei Nothaltsicherheitskreise 30 zur Einnahme eines Aktivzustandes (A) zu öffnen. Der Zustimmtaster 20 ist dazu ausgebildet, zwei Schließer-Kontakte 43 zu betätigen, welcher dazu ausgebildet sind, zwei Zustimmtastersicherheitskreise 31 zur Einnahme eines Zustimmungszustandes (Z) zu schließen.

Durch Aufbringung einer ersten Betätigungskraft 45 auf ein Zustimmtaster-Betätigungsorgan 26 des Zustimmtasters 20 ist der Zustimmungszustand (Z) einnehmbar, wobei zumindest ein Zustimmtastersicherheitskreis 31 mittels den Schließer-Kontakten 43 geschlossen wird. Durch Aufbringung einer zweiten Betätigungskraft 46 auf das Zustimmtaster-Betätigungsorgan 26 oder durch Aufbringung der zweiten Betätigungskraft 46 auf den Betätigungsbereich 37 ist der der Aktivzustand (A) des Nothalt-Schaltmittels 19 einnehmbar. Die erste Betätigungskraft 45 ist geringer gegenüber der zweiten Betätigungskraft 46.

Nothaltsicherheitskreis 30 und Zustimmtastersicherheitskreis 31 sind in den in den Fig. 7a bis 7c dargestellten Ausführungsformen zweikreisig ausgeführt, wobei auch eine nicht näher dargestellte mehrkreisige Ausführungsform denkbar ist.

In der Darstellung gemäß Fig. 7a befindet sich das Nothalt-Schaltmittel 19 in einem Inaktivzustand (I) und das Zustimmtaster (20) in einem Ruhezustand (R).

In Fig. 7b befindet sich das Nothalt-Schaltmittel 19 in dem Inaktivzustand (I) und der Zustimmtaster 20 in dem Zustimmungszustand (Z).

Gemäß der Darstellung in Fig. 7c befindet sich das Nothalt-Schaltmittel 19 in dem Aktivzustand (A) und der Zustimmtaster 20 in dem Ruhezustand (R).

Bei der Vornahme von potentiell gefahrbringenden Programmier- oder Teaching-Aufgaben wird zuerst eine Maschine 4 oder ein Roboters 5 in einen sogenannten "Manuellen Betriebsmodus" überführt. In diesem "Manuellen Betriebsmodus" erfolgt die Freigabe von gefährlichen oder potentiell gefährlichen Abläufen oder Bewegungen einer Maschine 4 oder eines Roboters 5 durch eine Betätigung des Zustimmtasters 20 mit einer ersten Betätigungskraft 45. Bei einem Eintritt einer unvorhergesehenen gefährlichen Situation wird durch den Bediener 12 die zweite Betätigungskraft 46 auf das Zustimmtaster-Betätigungsorgan 26 aufgebracht. Dadurch dass der Zustimmtaster 20 lastabtragend am Nothalt-Schaltmittel 19 abgestützt ist, erfolgt eine gleichzeitige Betätigung des Nothalt-Schaltmittels 19, durch Betätigung eines Lastabtragungsbereiches 33. Hierbei wird der Nothalt-Aktivzustand (A) herbeigeführt.

Alternativ dazu kann der Nothalt-Aktivzustand (A) auch durch Betätigung des zweiten Nothalt Betätigungsbereichs 37 herbeigeführt werden. Bei Betätigung des Betätigungsbereiches 37 entlang eines Betätigungsweges 38 in eine Betätigungsrichtung 39, wird der Zustimmtaster 20 des Sicherheitsschaltelements 1 entlang des Betätigungsweges 38 in die Betätigungsrichtung 39 verschoben. Hierzu kann ein nicht näher dargestellter Mitnehmer 36 vorgesehen sein, welcher auch dazu ausgebildet sein kann, während der Betätigung des Nothalt-Schaltmittels 19 in den Nothalt-Aktivzustand die Betätigung des Zustimmtasters 20 in den Zustimmungszustand (Z) zu blockieren.

Der Aktivzustand (A) ist somit auf zwei Arten herbeiführbar. Im Aktivzustand (A) verweilt der Zustimmtaster 20 in dem Ruhezustand (R).

Zusätzlich kann vorgesehen sein, dass der Nothalt-Schaltzustand und/oder der System-Zustimmtaster-Schaltzustand von einer Auswertelogik 32 ermittelt wird. Hierbei kann eine nicht näher dargestellte Messvorrichtung 41 vorgesehen sein, mittels welcher eine Betätigungsdauer des Zustimmtasters 20 mit der ersten Betätigungskraft 45 ermittelt wird. Hierbei kann zusätzlich oder alternativ gemessen werden wie lange ein Finger einer Hand eines Bedieners 12 auf dem Zustimmtaster-Betätigungsorgan 26 verweilt
Wird nun der Zustimmtaster 20 länger einer vordefinierten Zeitdauer mit der ersten Betätigungskraft 45 beaufschlagt, so befindet sich die Maschine 4 oder der Roboter 5 in einem System-Zustimmungszustand (Zs) für diese vordefinierte Zeit. Wird nun der Zustimmtaster 20 mit der zweiten Betätigungskraft 46 beaufschlagt, kann die Maschine 4 oder der Roboter 5 in einen System-Panikzustand (Ps) wechseln, oder alternativ dazu auch in den System-Nothalt-Aktivzustand (As). Bei sofortigem Aufbringen der zweiten Betätigungskraft 46 auf den Zustimmtaster 20, wird ein eventueller System-Zustimmungszustand (Zs) nicht eingenommen, sondern sofort der System-Nothalt-Aktivzustand (As). Durch die Unterscheidung zwischen System-Nothalt-Aktivzustand (As) und System-Panikzustand (Ps) kann die Maschine 4 oder der Roboter 5 in einen anderen, sicheren Betriebszustand überführt werden, wobei im System-Nothalt-Aktivzustand (As) und im System-Panikzustand (Zs) normativ die gleichen Stopp-Kategorien, nämlich 0 und 1, zulässig sind.

In der Fig. 8 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

In den Fig. 8a, 8b und 8c ist das Sicherheitsschaltelement 1 in unterschiedlichen Zustimm-Schaltzuständen dargestellt. Das Nothalt- Schaltmittel 19 kann hierbei mittels einer nicht näher dargestellten einer Beleuchtungseinheit selektiv beleuchtbar bzw. hinterleuchtbar ausgeführt sein, um einen bestimmten Zustand oder eine bestimmte Betriebsart zu signalisieren.

Die in Fig. 8 eingezeichneten Zustände Inaktivzustand (I) und Aktivzustand (A) des Nothalt-Schaltmittels 19 sind dabei jeweils auf die Oberkante des Nothalt-Schaltmittels 19 bezogen. Die Zustände Ruhezustand (R) und Zustimmungszustand (Z) sind ebenfalls jeweils auf die Oberkante eines Zustimmtasters 20 bezogen.

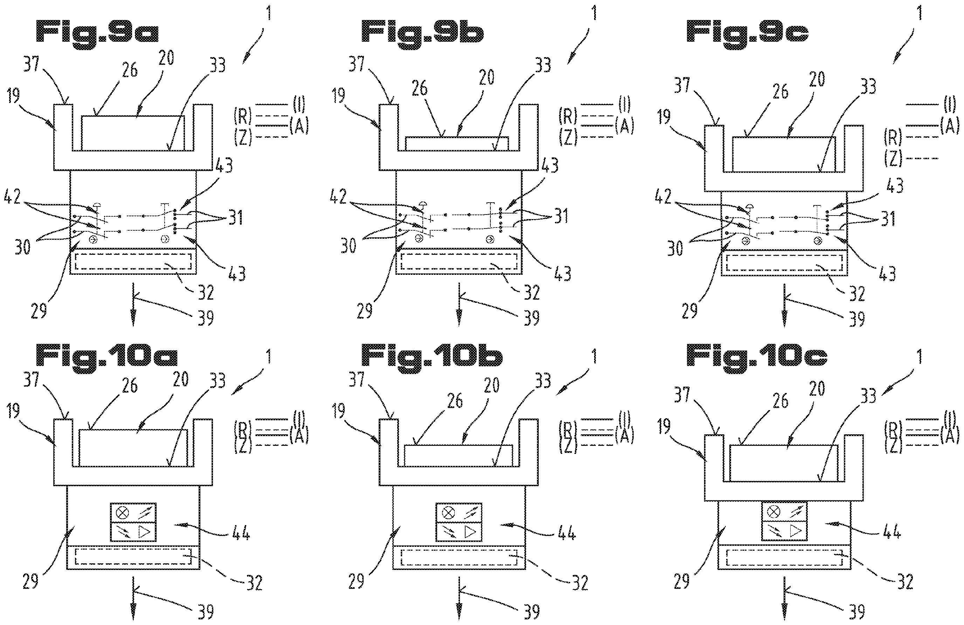

In der Fig. 9 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

In den Fig. 9a, 9b und 9c ist das Sicherheitsschaltelement 1 in unterschiedlichen Schaltzuständen dargestellt, wobei eine Auswertelogik 32 oder Schnittstelle zur Auswertelogik 32 im Schaltersockel 29 vorgesehen ist. Über ein nicht näher dargestelltes, mit der Auswertelogik 32 gekoppeltes Sicherheitssteuerungsmodul bzw. Auswertungsmodul 49 oder eine Sicherheits-Bussystem kann eine Auswertung dahingehend erfolgen, ob ein System-Panikzustand (Ps) durch Betätigung eines Zustimmtaster-Betätigungsbereichs 37 mit einer zweiten Betätigungskraft 46 nachdem zuvor der Betätigungsbereich 37 über einen längeren Zeitraum mit einer ersten Betätigungskraft 45 betätigt wurde, herbeigeführt werden soll, oder ob die zweite Betätigungskraft 46 auf einen Lastabtragungsbereich 33 aufgebracht wurde und ein System-Nothalt-Aktivzustand (As) herbeigeführt werden soll.

Die in Fig. 9 eingezeichneten Zustände Inaktivzustand (I) und Aktivzustand (A) eines Nothalt-Schaltmittels 19 sind dabei jeweils auf die Oberkante des Nothalt-Schaltmittels 19 bezogen. Die Zustände Ruhezustand (R) und Zustimmungszustand (Z) sind ebenfalls jeweils auf die Oberkante eines Zustimmtasters 20 bezogen.

In der Fig. 10 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 9 verwendet werden. Um unnötige Wiederholungen zu vermeiden, wird auf die detaillierte Beschreibung in den vorangegangenen Fig. 1 bis 9 hingewiesen bzw. Bezug genommen.

In den Fig. 10a, 10b und 10c ist das Sicherheitsschaltelement 1 in unterschiedlichen Schaltzuständen dargestellt, wobei anstelle von Schaltkontakten 42, 43 Lichtschranken 44 vorgesehen sind. Hiermit können elektromechanische Öffner-Kontakte 42 oder Schließer-Kontakte 43 durch verschleißfreie Mikro-Lichtschranken 44 oder Lichtgabeln mit sicherheitsgerichteter Selbsttestung (Pulse) ersetzt werden. Die Erkennung der Schalterstellungen und der damit verbundenen Schaltzustände, erfolgt hierbei über die vorgesehenen Lichtschranken 44.

Die in Fig. 10 eingezeichneten Zustände Inaktivzustand (I) und Aktivzustand (A) eines Nothalt-Schaltmittels 19 sind dabei jeweils auf die Oberkante des Nothalt-Schaltmittels 19 bezogen. Die Zustände Ruhezustand (R) und Zustimmungszustand (Z) sind ebenfalls jeweils auf die Oberkante eines Zustimmtasters 20 bezogen.

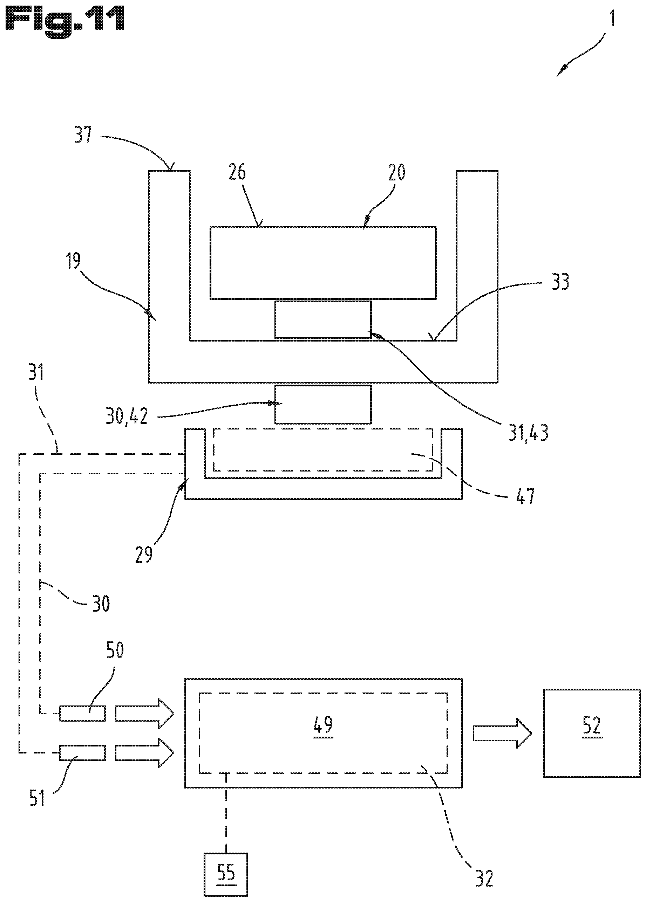

In der Fig. 11 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 10 verwendet werden. Um unnötige Wiederholungen zu vermeiden, wird auf die detaillierte Beschreibung in den vorangegangenen Fig. 1 bis 10 hingewiesen bzw. Bezug genommen.

Das Sicherheitsschaltelement 1 weist in einem Lastabtragungsbereich 33 zumindest einen Teil eines Zustimmtastersicherheitskreises 31 mit zumindest einem Schließer-Kontakt 43 auf. Zumindest ein Teil eines Nothaltsicherheitskreises 30 mit zumindest einem Öffner-Kontakt 42 ist in einem Schaltersockel 29 aufgenommen. Ferner ist dem Schaltersockel 29 eine Montagebasis 47 für die Kontaktelemente vorgesehen, welche dazu ausgebildet ist im Zuge einer Betätigung des Sicherheitsschaltelements 1 eine Gegenkraft auszuüben.

Über zumindest einen Nothaltsicherheitskreis 30 und zumindest einen Zustimmtastersicherheitskreis 31 ist das Sicherheitsschaltelement 1 mit einem Auswertungsmodul 49 einer Steuereinrichtung 6 oder Steuervorrichtung 8, 9, 10, 14 wirktechnisch verbunden. Das Auswertungsmodul 49 umfasst dabei eine Auswertelogik 32. An das Auswertungsmodul 49 wird der Zustand 50, 51 der Nothaltsicherheitskreise 30, Zustimmtastersicherheitskreise 31, Öffner-Kontakte 42 bzw. Schließer-Kontakte 43 übertragen bzw. ausgelesen, wobei mittels einer logischen Auswertung ein Systemzustand 52 ermittelt werden kann. Der Systemzustand 52 bildet dabei einen Gesamtzustand des Sicherheitsschaltelements 1 ab und umfasst einen System-Ruhezustand (Rs), einen System-Zustimmungszustand (Zs), einen System-Panikzustand (Ps), einen System-Nothalt-Aktivzustand (As) und einen System-Fehlerzustand (Fs), welcher an der Maschine den System-Nothalt-Aktivzustand (As) beibehaltet. In dem System-Ruhezustand (R_{S}) befindet sich dabei das Nothalt-Schaltmittel 19 in einem Inaktivzustand (I).

In dem Auswertungsmodul 49 bzw. der Auswertelogik 32 kann zwischen einem "Manuellen Betriebsmodus" und einem "Automatikmodus" unterschieden werden bzw. umgeschaltet werden. Hierzu kann an dem Auswertungsmodul 49 ein Betriebswahlschalter 55 vorgesehen sein, bzw. kann mit der Auswertelogik 32 ein Betriebswahlschalter 55 gekoppelt sein. In dem "Manuellen Betriebsmodus" kann das System die Systemzustände System-Zustimmungszustand (Zs), Nothalt-Aktivzustand (As), System-Fehlerzustand (Fs), System-Ruhezustand (Rs) oder System-Panikzustand (Ps) einnehmen. In dem "Automatikmodus" kann das System nur den System-Nothalt-Aktivzustand (As) einnehmen.

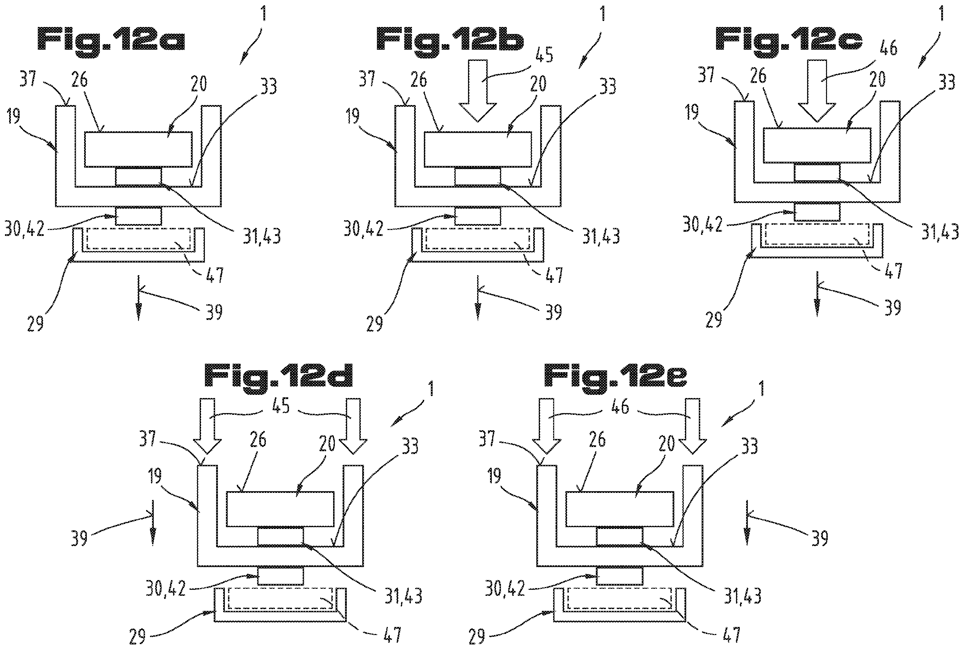

In der Fig. 12 ist ein Sicherheitsschaltelement 1 gemäß Fig. 11 in unterschiedlichen Schaltzuständen gezeigt, wobei wiederum für gleiche Teile gleiche Bezugszeichen bzw. Bauteilbezeichnungen wie in den vorangegangenen Fig. 1 bis 11 verwendet werden. Um unnötige Wiederholungen zu vermeiden, wird auf die detaillierte Beschreibung in den vorangegangenen Fig. 1 bis 11 hingewiesen bzw. Bezug genommen.

In der Fig. 12a befindet sich das Sicherheitsschaltelement 1 in einem unbetätigten Zustand, wobei sich das Nothalt-Schaltmittel 19 im Inaktivzustand (I) und der Zustimmtaster 20 im Ruhezustand (R) befinden. Über das Auswertungsmodul 49 wird dabei der System-Ruhezustand (Rs) ermittelt. Die Zwangs-Öffner-Kontakte 42 sind in diesem Zustand geschlossen und die Schließer-Kontakte 43 sind in diesem Zustand geöffnet.

Eine mit dem Sicherheitsschaltelement 1 gekoppelte technische Anlage 2, Maschine 4, oder ein Roboter 5 befindet sich in einem "Manuellen Betriebsmodus" ohne Bewegungsfreigabe.

In der Fig. 12b ist das Aufbringen einer ersten Betätigungskraft 45 auf den Zustimmtaster 20 bzw. ein Zustimmtaster-Betätigungsorgan 26 dargestellt. Das Nothalt-Schaltmittel 19 befindet sich im Inaktivzustand (I) und der Zustimmtaster 20 wird in den Zustimmungszustand (Z) überführt. Über das Auswertungsmodul 49 bzw. die Auswertelogik 32 wird dabei der System-Zustimmungszustand (Zs) ermittelt. Die Schließer-Kontakte 43 sind in diesem Zustand geschlossen und die Zwangs-Öffner-Kontakte 42 sind in diesem Zustand ebenfalls geschlossen.

An einer mit dem Sicherheitsschaltelement 1 gekoppelten technische Anlage 2, Maschine 4, oder einem Roboter 5 befindet sich in einem "Manuellen Betriebsmodus" mit Bewegungsfreigabe, damit können in diesem Zustand gefahrenbringende oder potentiell gefährliche Operationen ausgeführt werden, wie z.B. Programmier- oder Teachingoperationen eingeleitet bzw. bestätigt werden.

In der Fig. 12c ist das Aufbringen einer zweiten Betätigungskraft 46 auf den Zustimmtaster 20 bzw. das Zustimmtaster-Betätigungsorgan 26 dargestellt. Das Nothalt-Schaltmittel 19 wird in den Nothalt-Aktivzustand (A) überführt. Über das Auswertungsmodul 49 bzw. die Auswertelogik 32 kann dabei zwischen dem System-Panikzustand (Ps) und dem System-Nothalt-Aktivzustand (As) unterschieden werden. Die Unterscheidung ist allerdings nicht relevant, weil bei den System-Zuständen je nach Anlagensicherheitskonzept dieselben Stopp-Kategorien vorliegen müssen. Von den Zwangs-Öffner-Kontakten 42 ist zumindest einer geöffnet, die Schließer-Kontakte 43 haben in diesem Zustand keinen Einfluss auf den Systemzustand 52.

An einer mit dem Sicherheitsschaltelement 1 gekoppelten technische Anlage 2, Maschine 4, oder einem Roboter 5 werden die sämtliche aktiven Funktionen in einen sicheren Systemzustand 52, entweder System-Panikzustand (Ps) oder System-Nothalt-Aktivzustand (As) überführt.

In der Fig. 12d ist das Aufbringen einer ersten Betätigungskraft 45 auf einen Betätigungsbereich 37 des Nothalt-Schaltmittels 19 dargestellt. Das Nothalt-Schaltmittel 19 verbleibt im Inaktivzustand (I) und der Zustimmtaster 20 im Ruhezustand (R). Über das Auswertungsmodul 49 bzw. die Auswertelogik 32 wird der System-Ruhezustand (Rs) ermittelt. Die Zwangs-Öffner-Kontakte 42 sind in diesem Zustand alle geschlossen und die Schließer-Kontakte 43 sind in diesem Zustand geöffnet.

Eine mit dem Sicherheitsschaltelement 1 gekoppelte technische Anlage 2, Maschine 4, oder ein Roboter 5 befindet sich in einem "Manuellen Betriebsmodus" ohne Bewegungsfreigabe.

In der Fig. 12e ist das Aufbringen einer zweiten Betätigungskraft 46 auf den Betätigungsbereich 37 des Nothalt-Schaltmittels 19 dargestellt. Das Nothalt-Schaltmittel 19 wird in den Aktivzustand (A) überführt. Über das Auswertungsmodul 49 bzw. die Auswertelogik 32 wird der System-Nothalt-Aktivzustand (As) ermittelt. Zumindest einer der Zwangs-Öffner-Kontakte 42 ist in diesem Zustand geöffnet, die Schaltzustände des Zustimmtasters 20 werden dabei nicht für den Systemstatus berücksichtigt.

An einer mit dem Sicherheitsschaltelement 1 gekoppelten technische Anlage 2, Maschine 4, oder einem Roboter 5 werden in den System-Nothalt-Aktivzustand (As) überführt, daher werden sämtliche aktiven Funktionen in einen sicheren Zustand überführt, wobei sämtliche gefahrbringenden Maschinen-Operationen gestoppt werden.

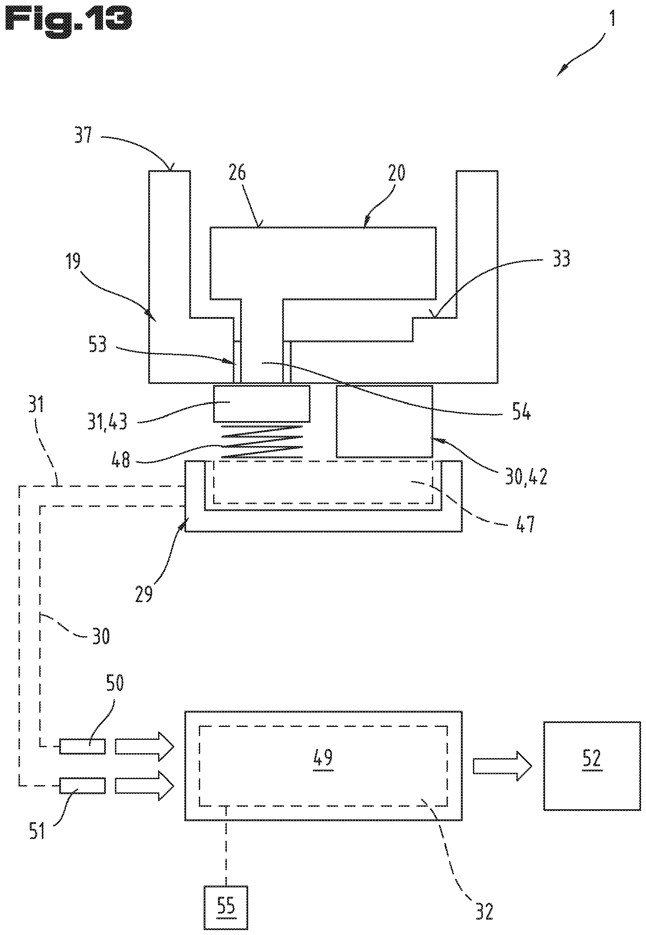

In der Fig. 13 ist eine weitere und gegebenenfalls für sich eigenständige Ausführungsform eines Sicherheitsschaltelements 1 gezeigt, wobei wiederum für gleiche Teile gleiche Bezugszeichen bzw. Bauteilbezeichnungen wie in den vorangegangenen Fig. 1 bis 12 verwendet werden. Um unnötige Wiederholungen zu vermeiden, wird auf die detaillierte Beschreibung in den vorangegangenen Fig. 1 bis 12 hingewiesen bzw. Bezug genommen.

Das Sicherheitsschaltelement 1 weist in einem Lastabtragungsbereich 33 eine Öffnung 53 auf, durch welche ein Betätiger 54 eines Zustimmtasters 20 in einen Schaltersockel 29 hineinragt. Zumindest ein erster Zustimmtastersicherheitskreis 31 mit zumindest einem Schließer-Kontakt 43 und ein Nothaltsicherheitskreis 30 mit zumindest einem Zwangs-Öffner-Kontakt 42 sind in dem Schaltersockel 29 aufgenommen. Ferner ist dem Schaltersockel 29 eine Montagebasis 47 für die Kontaktelemente vorgesehen, welche dazu ausgebildet ist im Zuge einer Betätigung des Sicherheitsschaltelements 1 eine Gegenkraft auszuüben. Zwischen der Montagebasis 47 und dem Zustimmtastersicherheitskreis 31 bzw. zumindest einen Schließer-Kontakt 43 ist dabei ein Rückstellelement 48 vorgesehen, wobei es sich bei dem Rückstellelement 48 beispielsweise um eine Rückstellfeder handeln kann. Wird der Zustimmtaster 20 in einen Zustimmungszustand (Z) oder Nothalt-Aktivzustand (A) überführt, kann dieser bei Loslassen des Zustimmtaster-Betätigungsorgans 26 durch einen Bediener 12 mittels dem Rückstellelement 48 automatisch in einen Ruhezustand (R) zurückgestellt werden. Der Zustimmtaster 20 befindet sich also, sofern keine Kraft durch einen Bediener 12 aufgebracht wird, immer im Ruhezustand (R).

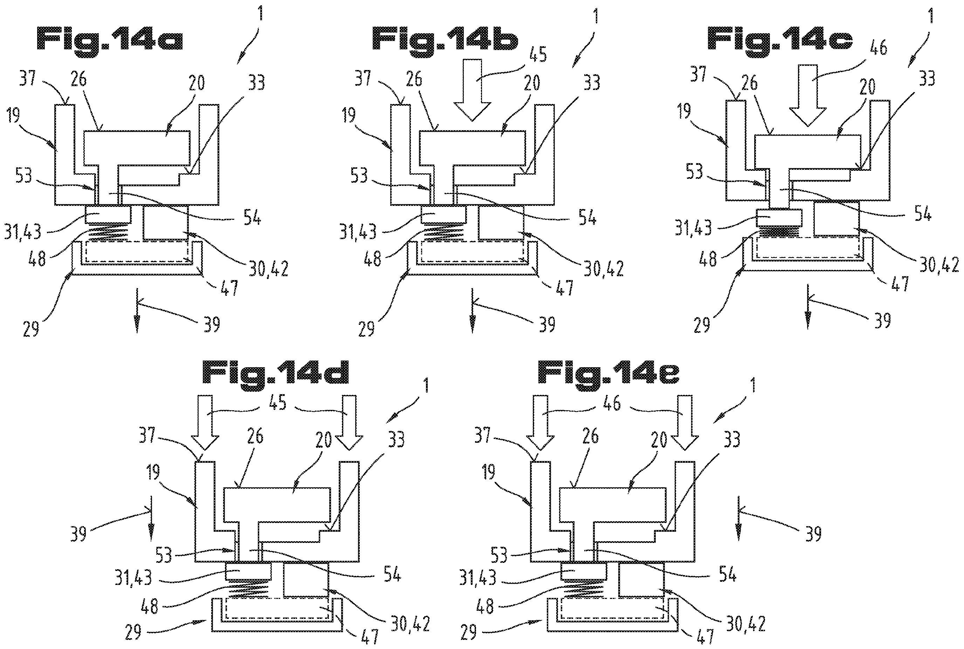

In der Fig. 14 ist ein Sicherheitsschaltelement 1 gemäß Fig. 13 in unterschiedlichen Schaltzuständen gezeigt, wobei wiederum für gleiche Teile gleiche Bezugszeichen bzw. Bauteilbezeichnungen wie in den vorangegangenen Fig. 1 bis 13 verwendet werden. Um unnötige Wiederholungen zu vermeiden, wird auf die detaillierte Beschreibung in den vorangegangenen Fig. 1 bis 13 hingewiesen bzw. Bezug genommen.

In der Fig. 14a befindet sich das Sicherheitsschaltelement 1 in einem unbetätigten Zustand, wobei sich das Nothalt-Schaltmittel 19 im Inaktivzustand (I) und der Zustimmtaster 20 im Ruhezustand (R) befinden. Der Zustimmtaster 20 wird dabei über das Rückstellelement 48 in dem Ruhezustand (R) gehalten. Über das Auswertungsmodul 49 bzw. die Auswertelogik 32 wird dabei der System-Ruhezustand (Rs) ermittelt. Die Zwangs-Öffner-Kontakte 42 sind in diesem Zustand geschlossen und die Schließer-Kontakte 43 sind in diesem Zustand geöffnet. Das System befindet sich in einem "Manuellen Betriebsmodus" ohne Bewegungsfreigabe.

In der Fig. 14b ist das Aufbringen einer ersten Betätigungskraft 45 auf den Zustimmtaster 20 bzw. ein Zustimmtaster-Betätigungsorgan 26 dargestellt. Das Nothalt-Schaltmittel 19 befindet sich im Inaktivzustand (I) und der Zustimmtaster 20 wird in den Zustimmungszustand (Z) überführt. Das Rückstellelement 48 wird mit der ersten Betätigungskraft 45 in den Zustimmungszustand (Z) betätigt. Über das Auswertungsmodul 49 bzw. die Auswertelogik 32 wird dabei der System-Zustimmungszustand (Zs) ermittelt. Die Zwangs-Öffner-Kontakte 42 sind in diesem Zustand geschlossen und die Schließer-Kontakte 43 sind in diesem Zustand geschlossen.

Wird der Zustimmtaster 20 bzw. das Zustimmtaster-Betätigungsorgan 26 vom Bediener 12 losgelassen, so erfolgt über das Rückstellelement 48 eine automatische Rückstellung in den Ruhezustand (R).

In der Fig. 14c ist das Aufbringen einer zweiten Betätigungskraft 46 auf den Zustimmtaster 20 bzw. das Zustimmtaster-Betätigungsorgan 26 dargestellt. Das Nothalt-Schaltmittel 19 wird in den Nothalt-Aktivzustand (A) überführt über das Rückstellelement 48 mit der zweiten Betätigungskraft 46. Über das Auswertungsmodul 49 bzw. die Auswertelogik 32 kann dabei zwischen einem System-Panikzustand (Ps) oder einem System-Nothalt-Aktivzustand (As) unterschieden werden. Über diese Unterscheidung können z.B. unterschiedliche Stopp-Kategorien angewendet werden. Zumindest einer der Zwangs-Öffner-Kontakte 42 ist in diesem Zustand geöffnet. Der Zustand der Schließer-Kontakte 43 ist für diesen Systemzustand 52 nicht relevant.

Wird der Zustimmtaster 20 bzw. das Zustimmtaster-Betätigungsorgan 26 vom Bediener 12 losgelassen, so erfolgt über das Rückstellelement 48 eine automatische Rückstellung in den Ruhezustand (R).

In der Fig. 14d ist das Aufbringen einer ersten Betätigungskraft 45 auf einen Betätigungsbereich 37 des Nothalt-Schaltmittels 19 dargestellt. Das Nothalt-Schaltmittel 19 verbleibt im Inaktivzustand (I) und der Zustimmtaster 20 im Ruhezustand (R). Der Zustimmtaster 20 wird dabei über das Rückstellelement 48 in dem Ruhezustand (R) gehalten. Über das Auswertungsmodul 49 bzw. die Auswertelogik 32 wird der System-Ruhezustand (Rs) ermittelt. Alle Zwangs-Öffner-Kontakte 42 sind in diesem Zustand geschlossen und die Schließer-Kontakte 43 sind in diesem Zustand geschlossen.

In der Fig. 14e ist das Aufbringen einer zweiten Betätigungskraft 46 auf den Betätigungsbereich 37 des Nothalt-Schaltmittels 19 dargestellt. Das Nothalt-Schaltmittel 19 wird in den Aktivzustand (A) überführt und der Zustimmtaster 20 verbleibt im Ruhezustand (R). Der Zustimmtaster 20 wird dabei über das Rückstellelement 48 in dem Ruhezustand (R) gehalten. Über das Auswertungsmodul 49 bzw. die Auswertelogik 32 wird der System-Nothalt-Aktivzustand (As) ermittelt. Zumindest einer der Zwangs-Öffner-Kontakte 42 ist in diesem Zustand geöffnet.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Sicherheitsschaltelement | 31 | Zustimmtastersicherheitskreis |
| 2 | technische Anlage | 32 | Auswertelogik |
| 3 | Bedienvorrichtung | 33 | Lastabtragungsbereich |
| 4 | Maschine | 34 | Rücksprung |
| 5 | Roboter | 35 | Innenmantelfläche |
| 6 | Steuereinrichtung | 36 | Mitnehmer |
| 7 | zentrale Steuervorrichtung | 37 | Betätigungsbereich |
| 8 | Steuervorrichtung | 38 | Betätigungsweg |
| 9 | Steuervorrichtung | 39 | Betätigungsrichtung |
| 10 | Steuervorrichtung | 40 | Nothalt-Rastvorrichtung |
| 11 | Handbediengerät | 41 | Messvorrichtung |
| 12 | Bediener | 42 | Öffner-Kontakt |
| 13 | Schnittstelle | 43 | Schließer-Kontakt |
| 14 | Steuervorrichtung | 44 | Lichtschranke |
| 15 | Gehäuse | 45 | erste Betätigungskraft |
| 16 | Kabel | 46 | zweiten Betätigungskraft |
| 17 | Schnittstelle | 47 | Montagebasis |
| 18 | Bedienelement | 48 | Rückstellelement |
| 19 | Nothalt-Schaltmittel | 49 | Auswertungsmodul |
| 20 | Zustimmtaster | 50 | Zustand Öffner-Kontakt |
| 21 | Zustimmknochen | 51 | Zustand Schließer-Kontakt |
| 22 | Seitenwandung | 52 | Systemzustand |
| 23 | Hohlraum | 53 | Öffnung |
| 24 | oberer Wandbereich | 54 | Betätiger |
| 25 | Betätigungsschutzkragen | 55 | Betriebswahlschalter |
| 26 | Zustimmtaster-Betätigungsorgan | | |
| 27 | Ausnehmung | | |
| 28 | Oberfläche | | |
| 29 | Schaltersockel | | |
| 30 | Nothaltsicherheitskreis | | |

## Patentansprüche

1. Sicherheitsschaltelement (1) zur Verwendung in Kombination mit Programmier- und/oder Bedienelementen (18) einer Maschinen- bzw. Robotersteuerung für manuelle Steuer- bzw. Programmiervorgänge an Maschinen (4) oder Robotern (5) umfassend ein Nothalt-Schaltmittel (19), wobei das Nothalt-Schaltmittel (19) die wechselweise Einnahme der Nothalt-Schaltzustände Inaktivzustand (I) und Aktivzustand (A) ermöglicht; und einen Zustimmtaster (20), wobei der Zustimmtaster (20) die wechselweise Einnahme wenigstens zweier Zustimmtaster-Schaltzustände, wie Ruhezustand (R) und Zustimmungszustand (Z) ermöglicht;
**dadurch gekennzeichnet, dass**
der Zustimmtaster (20) lastabtragend am Nothalt-Schaltmittel (19) abgestützt ist.

2. Sicherheitsschaltelement (1) nach Anspruch 1, **dadurch gekennzeichnet, dass** das Nothalt-Schaltmittel (19) eine umlaufende Seitenwandung (22) umfasst, welche einen Hohlraum (23) begrenzt, in welchem Hohlraum (23) der Zustimmtaster (20) aufgenommen ist.

3. Sicherheitsschaltelement (1) nach Anspruch 2, **dadurch gekennzeichnet, dass** der Zustimmtaster (20) konzentrisch im Nothalt-Schaltmittel (19) aufgenommen ist.

4. Sicherheitsschaltelement (1) nach einem der vorhergehenden Ansprüche, **dadurch gekennzeichnet, dass** der Zustimmtaster (20) lastabtragend auf einem Lastabtragungsbereich (33) des Nothalt-Schaltmittels (19) abgestützt ist.

5. Sicherheitsschaltelement (1) nach Anspruch 4, **dadurch gekennzeichnet, dass** der Lastabtragungsbereich (33) als zumindest ein Rücksprung (34) an einer Innenmantelfläche (35) der Seitenwandung (22) des Nothalt-Schaltmittels (19) ausgebildet ist, auf welchem Rücksprung (34) der Zustimmtaster (20) zumindest teilweise lastabtragend abgestützt ist.

6. Sicherheitsschaltelement (1) nach einem der vorhergehenden Ansprüche, **dadurch gekennzeichnet, dass** der Zustimmungszustand (Z) durch Aufbringung einer ersten Betätigungskraft (45) auf ein Zustimmtaster-Betätigungsorgan (26) des Zustimmtasters (20) einnehmbar ist und dass der Aktivzustand (A) des Nothalt-Schaltmittels (19) durch Aufbringung einer zweiten Betätigungskraft (46) auf das Zustimmtaster-Betätigungsorgan (26) einnehmbar ist, wobei die erste Betätigungskraft (45) im Vergleich zur zweiten Betätigungskraft (46) geringer ist.

7. Sicherheitsschaltelement (1) nach einem der Ansprüche 2 bis 6, **dadurch gekennzeichnet, dass** in einem oberen Wandbereich (24) der Seitenwandung (22) des Nothalt-Schaltmittels (19) ein umlaufender Betätigungsschutzkragen (25) ausgebildet ist, welcher das Zustimmtaster-Betätigungsorgan (26) des Zustimmtasters (20) zumindest abschnittsweise überragt.

8. Sicherheitsschaltelement (1) nach Anspruch 7, **dadurch gekennzeichnet, dass** der Betätigungsschutzkragen (25) zumindest eine Ausnehmung (27) aufweist, wobei der Betätigungsschutzkragen (25) im Bereich der Ausnehmung (27) zumindest abschnittsweise im Wesentlichen flächenbündig mit der Oberfläche (28) des Zustimmtaster-Betätigungsorgans (26) ausgeführt ist.

9. Sicherheitsschaltelement (1) nach einem der vorhergehenden Ansprüche, **dadurch gekennzeichnet, dass** das Nothalt-Schaltmittel (19) einen Mitnehmer (36) für den Zustimmtaster (20) umfasst, wobei bei Vorliegen des Aktivzustandes (A) der Mitnehmer (36) die Betätigung des Zustimmtasters (20) in den Zustimmungszustand (Z) blockiert.

10. Sicherheitsschaltelement (1) nach einem der vorhergehenden Ansprüche, **dadurch gekennzeichnet, dass** zumindest ein Zustimmtastersicherheitskreis (31) mit zumindest einem Schließer-Kontakt (43) lastabtragend am Nothalt-Schaltmittel (19) abgestützt ist.

11. Sicherheitsschaltelement (1) nach einem der vorhergehenden Ansprüche, **dadurch gekennzeichnet, dass** es eine Auswertelogik (32) umfasst, welche dazu ausgebildet ist, aus dem Nothalt-Schaltzustand und/oder dem Zustimmtaster-Schaltzustand einen Systemzustand (52) zu ermitteln.

12. Sicherheitsschaltelement (1) nach Anspruch 11, **dadurch gekennzeichnet, dass** die Auswertelogik (32) die Einnahme eines System-Fehlerzustandes (Fs) ermöglicht, wobei der System-Fehlerzustand (Fs) einnehmbar ist, wenn ausgehend vom Aktivzustand (A) des Nothalt-Schaltmittels (19) der Inaktivzustand (I) aktiviert wird, wobei der Zustimmtaster (20) im Zustimmungszustand (Z) verweilt.

13. Bedienvorrichtung (3), insbesondere Handbediengerät (11) für Roboter (5) oder andere Maschinen (4) mit Programmier- und/oder Bedienelementen (18) zur Programmierung und/oder Steuerung von Bewegungsabläufen oder Betriebszuständen,
**dadurch gekennzeichnet, dass**
die Bedienvorrichtung (3) ein Sicherheitsschaltelement (1) nach einem der vorhergehenden Ansprüche umfasst.

14. Verfahren zum Überführen einer Maschine (4) oder eines Roboters (5) in einen sicheren Betriebszustand, umfassend die Verfahrensschritte
Bereitstellen eines Sicherheitsschaltelements (1) umfassend
ein Nothalt-Schaltmittel (19), wobei das Nothalt-Schaltmittel (19) die wechselweise Einnahme der Nothalt-Schaltzustände Inaktivzustand (I) und Aktivzustand (A) ermöglicht; und einen Zustimmtaster (20), wobei der Zustimmtaster (20) die wechselweise Einnahme wenigstens zweier Zustimmtaster-Schaltzustände, wie Ruhezustand (R) und Zustimmungszustand (Z) ermöglicht;
wobei der Zustimmtaster (20) lastabtragend am Nothalt-Schaltmittel (19) abgestützt ist und wobei der Zustimmungszustand (Z) durch Aufbringung einer ersten Betätigungskraft (45) auf ein Zustimmtaster-Betätigungsorgan (26) des Zustimmtasters (20) einnehmbar ist;
Verstellung des Nothalt-Schaltmittels (19) in den Aktivzustand (A) durch Betätigung des Zustimmtasters (20), wobei der Aktivzustand (A) des Nothalt-Schaltmittels (19) durch Aufbringung einer zweiten Betätigungskraft (46) auf das Zustimmtaster-Betätigungsorgan (26) eingenommen wird, wobei die erste Betätigungskraft (45) im Vergleich zur zweiten Betätigungskraft (46) geringer ist.

15. Verfahren nach Anspruch 14, **dadurch gekennzeichnet, dass** bei Betätigung des Nothalt-Schaltmittels (19) zumindest ein Nothaltsicherheitskreis (30) zur Einnahme des Aktivzustandes (A) geöffnet wird.

16. Verfahren nach Anspruch 14 oder 15, **dadurch gekennzeichnet, dass** durch Aufbringung der zweiten Betätigungskraft (46) auf das Zustimmtaster-Betätigungsorgan (26) zumindest ein Zustimmtastersicherheitskreis (31) zur Einnahme des Aktivzustandes (A) geöffnet wird.

17. Verfahren nach einem der Ansprüche 14 bis 16, **dadurch gekennzeichnet, dass** im Aktivzustand (A) des Nothalt-Schaltmittels (19) der Zustimmtaster (20) in einem Ruhezustand (R) verweilt und/oder ein Zustimmungszustand (Z) aufgehoben wird.

18. Verfahren nach einem der Ansprüche 14 bis 17, **dadurch gekennzeichnet, dass** ein Nothalt-Schaltzustand und/oder ein Zustimmtaster-Schaltzustand von einer Auswertelogik (32) ermittelt wird, und dass die Auswertelogik (32) einen System-Fehlerzustand (Fs) ermittelt, wenn ausgehend vom Aktivzustand (A) des Nothalt-Schaltmittels (19) der Inaktivzustand (I) aktiviert wird, wobei der Zustimmtaster (20) im Zustimmungszustand (Z) verweilt..

19. Verfahren nach einem der Ansprüche 14 bis 18, **dadurch gekennzeichnet, dass** eine Betätigungsdauer des Zustimmtasters (20) mit der ersten und/oder zweiten Betätigungskraft (45, 46) mittels einer Messvorrichtung (41) ermittelt wird.

## Claims

1. A safety switching element (1) for use in combination with programming and/or operating elements (18) of a machine and/or robot controller for manual control and/or programming operations on machines (4) or robots (5), comprising
an emergency stop switching means (19), wherein the emergency stop switching means (19) enables the alternate assumption of the emergency stop switching states inactive state (I) and active state (A); and
an enabling switch (20), wherein the enabling switch (20) enables the alternate assumption of at least two enabling switch switching states, such as rest state (R) and enabling state (Z);
**characterized in that**
the enabling switch (20) is supported in a load-bearing manner on the emergency stop switching means (19).

2. The safety switching element (1) according to claim 1, **characterized in that** the emergency stop switching means (19) comprises a circumferential side wall (22) which bounds a cavity (23) in which cavity (23) the enabling switch (20) is accommodated.

3. The safety switching element (1) according to claim 2, **characterized in that** the enabling switch (20) is concentrically accommodated in the emergency stop switching means (19).

4. The safety switching element (1) according to one of the preceding claims, **characterized in that** the enabling switch (20) is supported in a load-bearing manner on a load-bearing region (33) of the emergency stop switching means (19).

5. The safety switching element (1) according to claim 4, **characterized in that** the load-bearing region (33) is formed as at least one cutout (34) on an inner lateral surface (35) of the side wall (22) of the emergency stop switching means (19), on which cutout (34) the enabling switch (20) is at least partially supported in a load-bearing manner.

6. The safety switching element (1) according to one of the preceding claims, **characterized in that** the enabling state (Z) can be assumed by applying a first actuating force (45) to an enabling switch actuating member (26) of the enabling switch (20), and that the active state (A) of the emergency stop switching means (19) can be assumed by applying a second actuating force (46) to the enabling switch actuating member (26), wherein the first actuating force (45) is lower than the second actuating force (46).

7. The safety switching element (1) according to one of claims 2 to 6, **characterized in that** a circumferential actuation protection collar (25) is formed in an upper wall region (24) of the side wall (22) of the emergency stop switching means (19), which actuation protection collar (25) projects at least in sections beyond the enabling switch actuating member (26) of the enabling switch (20).

8. The safety switching element (1) according to claim 7, **characterized in that** the actuation protection collar (25) has at least one recess (27), wherein the actuation protection collar (25) is configured in the region of the recess (27) to be essentially flush with the surface (28) of the enabling switch actuating member (26) at least in sections.

9. The safety switching element (1) according to one of the preceding claims, **characterized in that** the emergency stop switching means (19) comprises a driver (36) for the enabling switch (20), wherein, when the active state (A) is present, the driver (36) blocks the actuation of the enabling switch (20) into the enabling state (Z).

10. The safety switching element (1) according to one of the preceding claims, **characterized in that** at least one enabling switch safety circuit (31) with at least one normally open contact (43) is supported in a load-bearing manner on the emergency stop switching means (19).

11. The safety switching element (1) according to one of the preceding claims, **characterized in that** it comprises an evaluation logic (32) which is configured to determine a system state (52) from the emergency stop switching state and/or the enabling switch switching state.

12. The safety switching element (1) according to claim 11, **characterized in that** the evaluation logic (32) enables a system fault state (Fs) to be assumed, wherein the system fault state (Fs) can be assumed if, starting from the active state (A) of the emergency stop switching means (19), the inactive state (I) is activated, wherein the enabling switch (20) remains in the enabling state (Z).

13. An operating device (3), in particular a hand-held operating device (11) for robots (5) or other machines (4), having programming and/or operating elements (18) for programming and/or controlling sequences of movements or operating states,
**characterized in that**
the operating device (3) comprises a safety switching element (1) according to one of the preceding claims.

14. A method for transferring a machine (4) or a robot (5) into a safe operating state, comprising the method steps
providing a safety switching element (1) comprising
an emergency stop switching means (19), wherein the emergency stop switching means (19) enables the alternate assumption of the emergency stop switching states inactive state (I) and active state (A); and
an enabling switch (20), wherein the enabling switch (20) enables the alternate assumption of at least two enabling switch switching states, such as rest state (R) and enabling state (Z);
wherein the enabling switch (20) is supported in a load-bearing manner on the emergency stop switching means (19) and wherein the enabling state (Z) can be assumed by applying a first actuating force (45) to an enabling switch actuating member (26) of the enabling switch (20);
displacement of the emergency stop switching means (19) into the active state (A) by actuation of the enabling switch (20), wherein the active state (A) of the emergency stop switching means (19) is assumed by application of a second actuating force (46) to the enabling switch actuating member (26), wherein the first actuating force (45) is lower than the second actuating force (46).

15. The method according to claim 14, **characterized in that** upon actuation of the emergency stop switching means (19) at least one emergency stop safety circuit (30) is opened to assume the active state (A).

16. The method according to claim 14 or 15, **characterized in that** by applying the second actuating force (46) to the enabling switch actuating member (26) at least one enabling switch safety circuit (31) is opened to assume the active state (A).

17. The method according to one of claims 14 to 16, **characterized in that** in the active state (A) of the emergency stop switching means (19), the enabling switch (20) remains in a rest state (R) and/or an enabling state (Z) is cancelled.

18. The method according to one of claims 14 to 17, **characterized in that** an emergency stop switching state and/or an enabling switch switching state is determined by an evaluation logic (32), and that the evaluation logic (32) determines a system fault state (Fs) when, starting from the active state (A) of the emergency stop switching means (19), the inactive state (I) is activated, wherein the enabling switch (20) remains in the enabling state (Z).

19. The method according to one of claims 14 to 18, **characterized in that** an actuation duration of the enabling switch (20) with the first and/or second actuation force (45, 46) is determined by means of a measuring device (41).

## Revendications

1. Élément de commutation (1) destiné à être utilisé en combinaison avec des éléments de programmation et/ou de commande (18) d'une commande de machine ou de robot pour des processus de commande ou de programmation manuels sur des machines (4) ou des robots (5), comprenant un moyen de commutation d'arrêt d'urgence (19), dans lequel le moyen de commutation d'arrêt d'urgence (19) permet le passage alterné dans les états de commutation d'arrêt d'urgence suivants : état inactif (I) et état actif (A) ; et un bouton d'assentiment (20), dans lequel le bouton d'assentiment (20) permet le passage alterné dans au moins deux états de commutation du bouton d'assentiment, comme l'état de repos (R) et l'état d'assentiment (Z) ;
**caractérisé en ce que**
le bouton d'assentiment (20) est appuyé, avec support de charge, sur le moyen de commutation d'arrêt d'urgence (19).

2. Élément de commutation (1) selon la revendication 1, **caractérisé en ce que** le moyen de commutation d'arrêt d'urgence (19) comprend une paroi latérale circulaire (22) qui délimite une cavité (23), le bouton d'assentiment (20) étant logé dans cette cavité (23).

3. Élément de commutation (1) selon la revendication 2, **caractérisé en ce que** le bouton d'assentiment (20) est logé de manière concentrique dans le moyen de commutation d'arrêt d'urgence (19).

4. Élément de commutation (1) selon l'une des revendications précédentes, **caractérisé en ce que** le bouton d'assentiment (20) est appuyé, avec support de charge, sur une zone de support de charge (33) du moyen de commutation d'arrêt d'urgence (19).

5. Élément de commutation (1) selon la revendication 4, **caractérisé en ce que** la zone de support de charge (33) est conçue comme au moins un renfoncement (34) sur une surface d'enveloppe interne (35) de la paroi latérale (22) du moyen de commutation d'arrêt d'urgence (19), le bouton d'assentiment (20) appuyé, au moins partiellement avec support de charge, sur ce renfoncement (34).

6. Élément de commutation (1) selon l'une des revendications précédentes, **caractérisé en ce que** l'état d'assentiment (Z) peut être obtenu par l'application d'une première force d'actionnement (45) sur un organe d'actionnement de bouton d'assentiment (26) du bouton d'assentiment (20) et **en ce que** l'état actif (A) du moyen de commutation d'arrêt d'urgence (19) est obtenu par l'application d'une deuxième force d'actionnement (46) sur l'organe d'actionnement de bouton d'assentiment (26), dans lequel la première force d'actionnement (45) est plus faible que la deuxième force d'actionnement (46).

7. Élément de commutation (1) selon l'une des revendications 2 à 6, **caractérisé en ce que**, dans une partie supérieure (24) de la paroi latérale (22) du moyen de commutation d'arrêt d'urgence (19), est prévu un col de protection d'actionnement circulaire (25) qui dépasse au moins à certains endroits de l'organe d'actionnement de bouton d'assentiment (26) du bouton d'assentiment (20).

8. Élément de commutation (1) selon la revendication 7, **caractérisé en ce que** le col de protection d'actionnement circulaire (25) comprend au moins un évidement (27), dan lequel le col de protection d'actionnement circulaire (25) est réalisé, au niveau de l'évidement (27), de manière globalement affleurante, au moins à certains endroits, avec la surface (28) de l'organe d'actionnement de bouton d'assentiment (26).

9. Élément de commutation (1) selon l'une des revendications précédentes, **caractérisé en ce que** le moyen de commutation d'arrêt d'urgence (19) comprend un taquet d'entraînement (36) pour le bouton d'assentiment (20), dans lequel, dans l'état actif (A), le taquet d'entraînement (36) bloque l'actionnement du bouton d'assentiment (20) dans l'état d'assentiment (Z).

10. Élément de commutation (1) selon l'une des revendications précédentes, **caractérisé en ce qu'**au moins un circuit de sécurité de bouton d'assentiment (31), avec au moins un contact normalement ouvert (43), est appuyé, avec support de charge, sur le moyen de commutation d'arrêt d'urgence (19).

11. Élément de commutation (1) selon l'une des revendications précédentes, **caractérisé en ce qu'**il comprend une logique d'analyse (32) qui est conçue pour déterminer, à partir de l'état de commutation d'arrêt d'urgence et/ou de l'état de commutation du bouton d'assentiment, un état du système (52).

12. Élément de commutation (1) selon la revendication 11, **caractérisé en ce que** la logique d'analyse (32) permet le passage à un état d'erreur du système (Fs), dans lequel l'état d'erreur du système (Fs) peut être obtenu lorsque, à partir de l'état actif (A) du moyen de commutation d'arrêt d'urgence (19), l'état inactif (I) est activé, dans lequel le bouton d'assentiment (20) reste dans l'état d'assentiment (Z).

13. Dispositif de commande (3), plus particulièrement appareil de commande portatif (11) pour des robots (5) ou d'autres machines (4) avec des éléments de programmation et/ou de commande (18) pour la programmation et/ou la commande de mouvements ou d'états de fonctionnement,
**caractérisé en ce que**
le dispositif de commande (3) comprend un élément de commutation de sécurité (1) selon l'une des revendications précédentes.

14. Procédé de passage d'une machine (4) ou d'un robot (5) dans un état de fonctionnement sûr, comprenant les étapes suivantes
mise à disposition d'un élément de commutation de sécurité (1) comprenant un moyen de commutation d'arrêt d'urgence (19), dans lequel le moyen de commutation d'arrêt d'urgence (19) permet le passage alterné dans les états de commutation d'arrêt d'urgence suivants : état inactif (I) et état actif (A) ; et un bouton d'assentiment (20), dans lequel le bouton d'assentiment (20) permet le passage alterné dans au moins deux états de commutation du bouton d'assentiment, comme l'état de repos (R) et l'état d'assentiment (Z) ;
dans lequel le bouton d'assentiment (20) est appuyé, avec support de charge, sur le moyen de commutation d'arrêt d'urgence (19) et
dans lequel l'état d'assentiment (Z) peut être obtenu par l'application d'une première force d'actionnement (45) sur un organe d'actionnement de bouton d'assentiment (26) de la touche d'assentiment (26) du bouton d'assentiment (20) ;
déplacement du moyen de commutation d'arrêt d'urgence (19) dans l'état actif (A) par l'actionnement du bouton d'assentiment (20), dans lequel l'état actif (A) du moyen de commutation d'arrêt d'urgence (19) est obtenu par l'application d'une deuxième force d'actionnement (46) sur l'organe d'actionnement de bouton d'assentiment (26), dans lequel la première force d'actionnement (45) est plus faible que la deuxième force d'actionnement (46).

15. Procédé selon la revendication 14, **caractérisé en ce que**, lors de l'actionnement du moyen de commutation d'arrêt d'urgence (19), au moins un circuit de sécurité d'arrêt d'urgence (30) est ouvert pour le passage à l'état actif (A).

16. Procédé selon la revendication 14 ou 15, **caractérisé en ce que**, par l'application de la deuxième force d'actionnement (46) sur l'organe d'actionnement de bouton d'assentiment (26), au moins un circuit de sécurité de bouton d'assentiment (31) est ouvert pour le passage à l'état actif (A).

17. Procédé selon l'une des revendications 14 à 16, **caractérisé en ce que**, dans l'état actif (A) du moyen de commutation d'arrêt d'urgence (19), le bouton d'assentiment (20) reste dans un état de repos (R) et/ou un état d'assentiment (Z) est annulé.

18. Procédé selon l'une des revendications 14 à 17, **caractérisé en ce qu'**un état de commutation d'arrêt d'urgence et/ou un état de commutation de bouton d'assentiment est déterminé par une logique d'analyse (32) et **en ce que** la logique d'analyse (32) détermine un état d'erreur du système (Fs) lorsque, à partir de l'état actif (A) du moyen de commutation d'arrêt d'urgence (19), l'état inactif (I) est activé, dans lequel le bouton d'assentiment (20) reste dans l'état d'assentiment (Z).

19. Procédé selon l'une des revendications 14 à 18, **caractérisé en ce qu'**une durée d'actionnement du bouton d'assentiment (20) avec la première et/ou la deuxième force d'actionnement (45, 46) est déterminée au moyen d'un dispositif de mesure (41).
